# EUROPEAN PATENT APPLICATION

(11) **EP 4 322 292 A1**
(43) Date of publication of application: **14.02.2024**
(21) Application number: 22784722.5
(22) Date of filing: 07.04.2022
(51) Int. Cl.: H01M 50/131, B32B 27/36, H01G 11/78, H01M 50/105, H01M 50/117, H01M 50/121, H01M 50/129, H01M 50/141

(54) **EXTERIOR MATERIAL FOR POWER STORAGE DEVICE, METHOD FOR PRODUCING SAID EXTERIOR MATERIAL, SEALANT FILM, AND POWER STORAGE DEVICE**

(30) Priority: 07.04.2021 JP 2021065530; 07.04.2021 JP 2021065532
(71) Applicant: DAI NIPPON PRINTING CO., LTD., Tokyo 162-8001 (JP)
(72) Inventor: OKANO, Ai, Tokyo 162-8001 (JP); TAKEUCHI, Naoya, Tokyo 162-8001 (JP); TSUNEDA, Hiroki, Tokyo 162-8001 (JP); SASAKI, Miho, Tokyo 162-8001 (JP)
(74) Representative: Müller-Boré & Partner Patentanwälte PartG mbB
(86) International application number: PCT/JP2022/017315
(87) International publication number: WO 2022/215740

(57) **Abstract**

The present invention provides an exterior material for a power storage device, said exterior material being constituted by a laminated body that includes at least a base material layer, a barrier layer, and a heat-sealable resin layer in this order from the outer side. The heat-sealable resin layer is formed from a polybutylene terephthalate film. Said exterior material comprises a water-absorbing layer that is provided on the inner side than the barrier layer, and that contains a water-absorbing agent.

## Description

### TECHNICAL FIELD

The present disclosure relates to an exterior material for electrical storage devices, a method for manufacturing the exterior material for electrical storage devices, a sealant film, and an electrical storage device.

### BACKGROUND ART

Various types of electrical storage devices have been developed heretofore, and in every electrical storage device, an exterior material is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior material for electrical storage devices that have often been heretofore used have the disadvantage that it is difficult to keep up with diversification in shape, and there is a limit on weight reduction.

Thus, in recent years, a film-shaped laminate with a base material layer, a barrier layer, and a heat-sealable resin layer laminated in this order has been proposed as an exterior material for electrical storage devices which is easily processed into diversified shapes and is capable of achieving thickness reduction and weight reduction (see, for example, Patent Document 1).

In such an exterior material for electrical storage devices, generally, a concave portion is formed by cold molding, electrical storage device elements such as an electrode and an electrolytic solution are disposed in a space formed by the concave portion, and heat-sealable resin layers are heat-sealed to obtain an electrical storage device with electrical storage device elements housed in the exterior material for electrical storage devices.

### PRIOR ART DOCUMENT

### PATENT DOCUMENT

Patent Document 1: Japanese Patent Laid-open Publication No. 2008-287971

### SUMMARY OF THE INVENTION

### PROBLEMS TO BE SOLVED BY THE INVENTION

Ingress of moisture to the inside of an electrical storage device (electrical storage device element) deteriorates the performance of the electrical storage device. For this reason, for example, when the above-described film-shaped laminate is used as an exterior material, a barrier layer (including, for example, a metal foil) is provided. By providing a barrier layer, ingress of moisture from the outside of the barrier layer can be suppressed.

However, when a heat-sealable resin layer of the exterior material is heat-sealed to seal an electrical storage device element, ingress of moisture from an end surface of a layer on the inner side with respect to the barrier layer may occur because an end surface of the exterior material is exposed to the outside.

If the heat-sealable resin layer of the exterior material absorbs water before the electrical storage device element is sealed with the exterior material, moisture in a layer on the inner side with respect to the barrier layer may enter the electrical storage device element after the electrical storage device element is sealed.

Further, the temperature of an electrical storage device may become high during charging or in some use environments. For example, the temperature of an all-solid-state battery becomes high during charging. For this reason, it is desirable that an electrical storage device have heat resistance. Further, for example, an all-solid-state battery may be used in a state of being restrained by pressing the all-solid-state battery with high pressure for suppressing separation from a negative active material layer or a positive active material layer. For this reason, it is desirable that an electrical storage device have pressure resistance.

Under these circumstances, a main object of a first embodiment of the present disclosure is to provide an exterior material for electrical storage devices which suppresses ingress of moisture to the inside of an electrical storage device, and is excellent in heat resistance and pressure resistance.

The exterior material including a film-shaped laminate is provided with a barrier layer (including, for example, a metal foil). By providing a barrier layer, ingress of moisture from the outside of the barrier layer can be suppressed.

However, when a heat-sealable resin layer of the exterior material is heat-sealed to seal an electrical storage device element, ingress of moisture from an end surface of the heat-sealable resin layer may occur because an end surface of the exterior material is exposed to the outside. If the heat-sealable resin layer of the exterior material absorbs water before the electrical storage device element is sealed with the exterior material, moisture in a layer on the inner side with respect to the barrier layer may enter the electrical storage device element after the electrical storage device element is sealed.

For example, when the electrical storage device is an all-solid-state battery including a sulfide-based inorganic solid electrolyte, or a lithium secondary battery in which lithium-sulfur is used for a positive electrode, ingress of moisture to the inside of the electrical storage device may cause an increase in internal pressure of the electrical storage device due to generation of a sulfur-based gas, resulting in breakage of the electrical storage device.

Further, the temperature of an electrical storage device may become high during charging or in some use environments. For example, the temperature of an all-solid-state battery becomes high during charging. For this reason, it is desirable that an electrical storage device have heat resistance. Further, for example, an all-solid-state battery may be used in a state of being restrained by pressing the all-solid-state battery with high pressure for suppressing delamination between a negative active material layer or a positive active material layer and a solid electrolyte. For this reason, it is desirable that an electrical storage device have pressure resistance.

Under these circumstances, a main object of a second embodiment of the present disclosure is to provide an exterior material for electrical storage devices which absorbs a sulfur-based gas generated inside an electrical storage device, and is excellent in heat resistance and pressure resistance.

### MEANS FOR SOLVING THE PROBLEM

The inventors of the present disclosure have extensively conducted studies for achieving the object of the first embodiment. As a result, it has been found that an exterior material for electrical storage devices, which includes a laminate including at least a base material layer, a barrier layer and a heat-sealable resin layer in this order from the outside and in which the heat-sealable resin layer is formed of a polybutylene terephthalate film and a water absorbing layer containing a water absorbent is provided on the inner side with respect to the barrier layer, suppresses ingress of moisture to the inside of an electrical storage device, and is excellent in heat resistance and pressure resistance.

The first embodiment of the present disclosure has been completed by further conducting studies on the basis of the above-mentioned novel findings. That is, the first embodiment of the present disclosure provides an invention of an aspect as described below.

An exterior material for electrical storage devices, including a laminate including at least a base material layer, a barrier layer and a heat-sealable resin layer in this order from the outside, in which
the heat-sealable resin layer is formed of a polybutylene terephthalate film, and
a water absorbing layer containing a water absorbent is provided on an inner side with respect to the barrier layer.

The inventors of the present disclosure have extensively conducted studies for achieving the object of the second embodiment. As a result, it has been found that an exterior material for electrical storage devices, which includes a laminate including at least a base material layer, a barrier layer and a heat-sealable resin layer in this order from the outside and in which the heat-sealable resin layer is formed of a polybutylene terephthalate film and a sulfur-based gas absorbing layer containing a sulfur-based gas absorbent is provided on the inner side with respect to the barrier layer, absorbs a sulfur-based gas generated inside an electrical storage device, and is excellent in heat resistance and pressure resistance.

The second embodiment of the present disclosure has been completed by further conducting studies on the basis of the above-mentioned novel findings. That is, the second embodiment of the present disclosure provides an invention of an aspect as described below.

An exterior material for electrical storage devices, including a laminate including at least a base material layer, a barrier layer and a heat-sealable resin layer in this order from the outside, in which
the heat-sealable resin layer is formed of a polybutylene terephthalate film, and
a sulfur-based gas absorbing layer containing a sulfur-based gas absorbent is provided on the inner side with respect to the barrier layer.

### ADVANTAGES OF THE INVENTION

According to the first embodiment of the present disclosure, it is possible to provide an exterior material for electrical storage devices which suppresses ingress of moisture to the inside of an electrical storage device, and is excellent in heat resistance and pressure resistance. According to the second embodiment of the present disclosure, it is possible to provide a method for manufacturing the exterior material for electrical storage devices, a sealant film, and an electrical storage device utilizing the exterior material for electrical storage devices.

According to the second embodiment of the present disclosure, it is possible to provide an exterior material for electrical storage devices which absorbs a sulfur-based gas generated inside an electrical storage device, and is excellent in heat resistance and pressure resistance. According to the second embodiment of the present disclosure, it is possible to provide a method for manufacturing the exterior material for electrical storage devices, a sealant film, and an electrical storage device utilizing the exterior material for electrical storage devices.

### BRIEF DESCRIPTION OF THE DRAWINGS

Fig. 1 is a schematic diagram showing an example of a cross-sectional structure of an exterior material for electrical storage devices according to the present disclosure.
Fig. 2 is a schematic diagram showing an example of a cross-sectional structure of an exterior material for electrical storage devices according to the present disclosure.
Fig. 3 is a schematic diagram showing an example of a cross-sectional structure of an exterior material for electrical storage devices according to the present disclosure.
Fig. 4 is a schematic diagram showing an example of a cross-sectional structure of an exterior material for electrical storage devices according to the present disclosure.
Fig. 5 is a schematic diagram showing an example of a cross-sectional structure of a heat-sealable resin layer (sealant film) of an exterior material for electrical storage devices according to the present disclosure.
Fig. 6 is a schematic diagram showing an example of a cross-sectional structure of a heat-sealable resin layer (sealant film) of an exterior material for electrical storage devices according to the present disclosure.
Fig. 7 is a schematic diagram showing an example of a cross-sectional structure of a heat-sealable resin layer (sealant film) of an exterior material for electrical storage devices according to the present disclosure.
Fig. 8 is a schematic diagram for illustrating a method for housing an electrical storage device element in a packaging formed of an exterior material for electrical storage devices according to the present disclosure.
Fig. 9 is a schematic diagram for illustrating a method for evaluating the sealing strength in examples (25°C or 120°C).
Fig. 10 is a schematic diagram for illustrating a method for evaluating the sealing strength in examples (25°C or 120°C).
Fig. 11 is a schematic perspective view showing an example of an electrical storage device of the present disclosure.
Fig. 12 is a schematic diagram showing an example of a cross-sectional structure of the electrical storage devices of the present disclosure.

### EMBODIMENTS OF THE INVENTION

An exterior material for electrical storage devices according to the first embodiment of the present disclosure includes a laminate including at least a base material layer, a barrier layer and a heat-sealable resin layer in this order from the outside, in which the heat-sealable resin layer is formed of a polybutylene terephthalate film, and a water absorbing layer containing a water absorbent is provided on the inner side with respect to the barrier layer. The exterior material for electrical storage devices according to the first embodiment of the present disclosure suppresses ingress of moisture to the inside of an electrical storage device, and is excellent in heat resistance and pressure resistance.

An exterior material for electrical storage devices according to the second embodiment of the present disclosure includes a laminate including at least a base material layer, a barrier layer and a heat-sealable resin layer in this order from the outside, in which the heat-sealable resin layer is formed of a polybutylene terephthalate film, and a sulfur-based gas absorbing layer containing a sulfur-based gas absorbent is provided on the inner side with respect to the barrier layer. The exterior material for electrical storage devices according to the second embodiment of the present disclosure absorbs a sulfur-based gas generated inside an electrical storage device, and is excellent in heat resistance and pressure resistance.

Hereinafter, the exterior material for electrical storage devices according to the present disclosure will be described in detail. In this specification, a numerical range indicated by the term "A to B" means "A or more" and "B or less". For example, the expression of "2 to 15 mm" means 2 mm or more and 15 mm or less.

In the following description, matters common to the first and second embodiments of the present disclosure will be appropriately collectively described as matters related to the present disclosure, and matters related to the first or second embodiments will be described while being specified as matters related to the first or second embodiments.

### 1. Laminated structure of exterior material for electrical storage devices

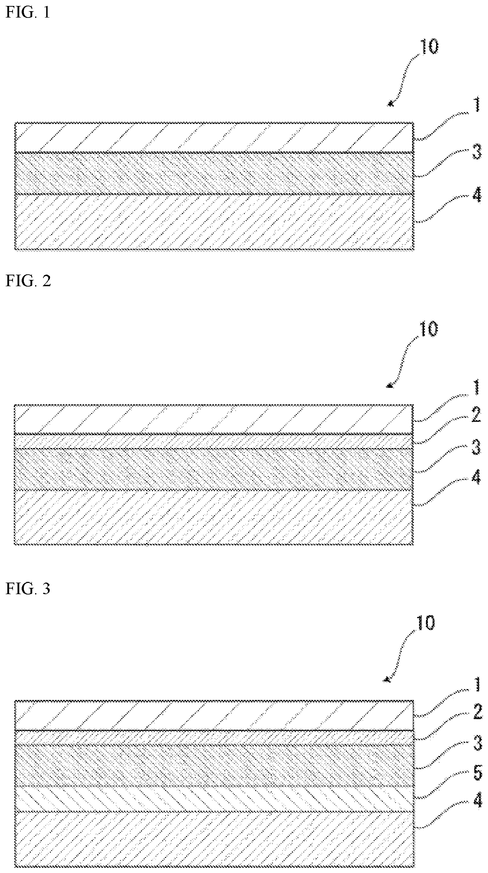

As shown in, for example, Fig. 1, an exterior material 10 for electrical storage devices according to the present disclosure includes a laminate including a base material layer 1, a barrier layer 3 and a heat-sealable resin layer 4 in this order. In the exterior material 10 for electrical storage devices, the base material layer 1 is on the outermost layer side, and the heat-sealable resin layer 4 is an innermost layer. In construction of an electrical storage device using the exterior material 10 for electrical storage devices and an electrical storage device element, the electrical storage device elements are put in a space formed by heat-sealing the peripheral portions of heat-sealable resin layers 4 of the exterior material 10 for electrical storage devices which face each other. In the laminate forming the exterior material 10 for electrical storage devices according to the present disclosure, the heat-sealable resin layer 4 is on the inner side with respect to the barrier layer 3, and the base material layer 1 is on the outer side with respect to the barrier layer 3.

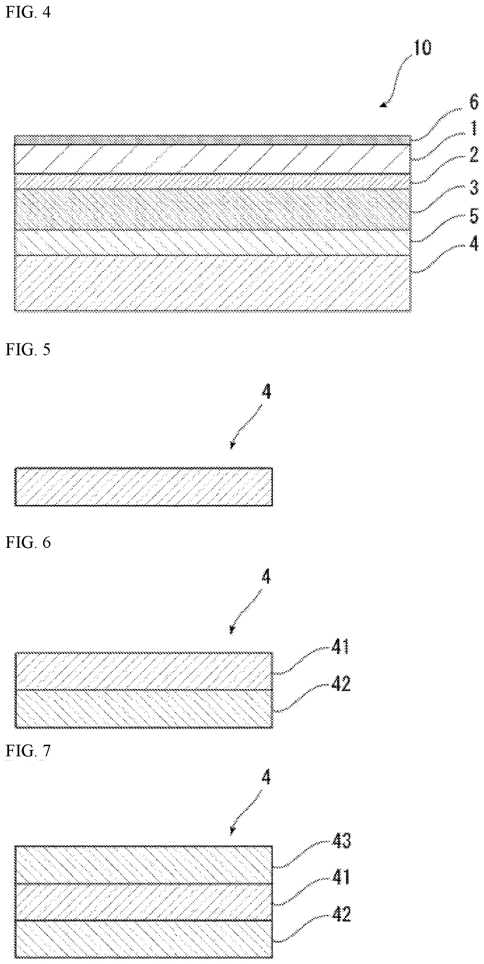

As shown in, for example, Figs. 2 to 4, the exterior material 10 for electrical storage devices may have an adhesive agent layer 2 between the base material layer 1 and the barrier layer 3 if necessary for the purpose of, for example, improving bondability between these layers. As shown in, for example, Figs. 3 and 4, an adhesive layer 5 may be present between the barrier layer 3 and the heat-sealable resin layer 4 if necessary for the purpose of, for example, improving bondability between these layers. As shown in Fig. 4, a surface coating layer 6 or the like may be provided on the outside of the base material layer 1 (on a side opposite to the heat-sealable resin layer 4 side) if necessary.

The exterior material 1 for electrical storage devices according to the present disclosure includes a water absorbing layer containing a water absorbent on the inner side with respect to the barrier layer 3. For example, the heat-sealable resin layer 4, the adhesive layer 5 and the like may include a water absorbing layer.

The thickness of the laminate forming the exterior material 10 for electrical storage devices is not particularly limited, and is, for example, 190 µm or less, preferably about 180 µm or less, about 155 µm or less, or about 120 µm or less, from the viewpoint of cost reduction, energy density improvement, and the like. The thickness of the laminate forming the exterior material 10 for electrical storage devices is preferably about 35 µm or more, about 45 µm or more, or about 60 µm or more, from the viewpoint of maintaining the function of an exterior material for electrical storage devices, which is protection of an electrical storage device element. The laminate forming the exterior material 10 for electrical storage devices is preferably in the range of, for example, about 35 to 190 µm, about 35 to 180 µm, about 35 to 155 µm, about 35 to 120 µm, about 45 to 190 µm, about 45 to 180 µm, about 45 to 155 µm, about 45 to 120 µm, about 60 to 190 µm, about 60 to 180 µm, about 60 to 155 µm, and about 60 to 120 µm, particularly preferably about 60 to 155 µm.

The exterior material 10 for electrical storage devices can be suitably applied to all-solid-state batteries. Here, the thickness of the laminate forming the exterior material 10 for electrical storage devices is not particularly limited, and is preferably about 10,000 µm or less, about 8,000 µm or less, or about 5,000 µm or less from the viewpoint of cost reduction, improvement of the energy density and the like, and preferably about 10 µm or more, about 15 µm or more, or about 20 µm or more from the viewpoint of maintaining the function of the exterior material for all-solid-state batteries, i.e., a function of protecting a battery element. The thickness of the laminate is preferably in the range of, for example, about 10 to 10,000 µm, about 10 to 8,000 µm, about 10 to 5,000 µm, about 15 to 10,000 µm, about 15 to 8,000 µm, about 15 to 5,000 µm, about 20 to 10,000 µm, about 20 to 8,000 µm, or about 20 to 5,000 µm, and particularly preferably about 200 to 5,000 µm.

In the exterior material 10 for electrical storage devices, the ratio of the total thickness of the base material layer 1, the adhesive agent layer 2 provided if necessary, the barrier layer 3, the adhesive layer 5 provided if necessary, the heat-sealable resin layer 4, and the surface coating layer 6 provided if necessary to the thickness (total thickness) of the laminate forming the exterior material 10 for electrical storage devices is preferably 90% or more, more preferably 95% or more, still more preferably 98% or more. As a specific example, when the exterior material 10 for electrical storage devices according to the present disclosure includes the base material layer 1, the adhesive agent layer 2, the barrier layer 3, the adhesive layer 5 and the heat-sealable resin layer 4, the ratio of the total thickness of these layers to the thickness (total thickness) of the laminate forming the exterior material 10 for electrical storage devices is preferably 90% or more, more preferably 95% or more, still more preferably 98% or more. In addition, when the exterior material 10 for electrical storage devices according to the present disclosure is a laminate including the base material layer 1, the adhesive agent layer 2, the barrier layer 3 and the heat-sealable resin layer 4, the ratio of the total thickness of these layers to the thickness (total thickness) of the laminate forming the exterior material 10 for electrical storage devices may be, for example, 80% or more, preferably 90% or more, more preferably 95% or more, still more preferably 98% or more.

### 2. Layers forming exterior material for electrical storage devices

### [Water absorbing layer]

The exterior material 1 for electrical storage devices according to the first embodiment of the present disclosure includes a water absorbing layer on the inner side with respect to the barrier layer 3. The water absorbing layer is a layer containing a water absorbent.

As described above, ingress of moisture to the inside of an electrical storage device (electrical storage device element) deteriorates the performance of the electrical storage device, and therefore the film-shaped exterior material is provided with a barrier layer (including, for example, a metal foil). By providing a barrier layer, ingress of moisture from the outside of the barrier layer can be suppressed. However, when a heat-sealable resin layer of the exterior material is heat-sealed to seal an electrical storage device element, ingress of moisture from an end surface of a layer on the inner side with respect to the barrier layer may occur because an end surface of the exterior material is exposed to the outside. If a layer of the exterior material on the inner side with respect to the barrier layer absorbs water before the electrical storage device element is sealed with the exterior material, moisture in a layer on the inner side with respect to the barrier layer may enter the electrical storage device element after the electrical storage device element is sealed.

To address this, in the exterior material 1 for electrical storage devices according to the first embodiment of the present disclosure, a water absorbing layer containing a water absorbent is provided on the inner side with respect to the barrier layer 3 to effectively suppress ingress of moisture from an end part of the exterior material and ingress of moisture contained a layer on the inner side with respect to the barrier layer, and absorb moisture contained in the electrical storage device element. That is, since the exterior material 1 for electrical storage devices according to the present disclosure includes a water absorbing layer containing a water absorbent on the inner side with respect to the barrier layer 3, the water absorbing layer can absorb and hold moisture from a layer of the exterior material on the inner side with respect to the barrier layer to inhibit moisture from reaching the electrical storage device element, and absorb moisture contained in the electrical storage device element.

In the first embodiment, the water absorbing layer is not particularly limited as long as it is located on the inner side with respect to the barrier layer 3. The water absorbing layer is present preferably in at least one of the adhesive layer 5 and the heat-sealable resin layer 4, more preferably in the heat-sealable resin layer 4 which is an innermost layer. As described later, the heat-sealable resin layer 4 may be a single layer, or may have two or more layers. When the heat-sealable resin layer 4 includes a water absorbing layer, the heat-sealable resin layer 4 is the water absorbing layer if the heat-sealable resin layer 4 is a single layer, and at least one of layers forming the heat-sealable resin layer 4 is the water absorbing layer if the heat-sealable resin layer 4 has two or more layers.

In the first embodiment of the present disclosure, the moisture to be absorbed is moisture from gas and/or liquid. As described later, the exterior material for electrical storage devices according to the present disclosure may also target a sulfur-based gas for absorption if necessary. Examples of the sulfur-based gas include hydrogen sulfide, dimethyl sulfide, methyl mercaptan, and sulfur oxide represented by SOx. The moisture to be absorbed generates various kinds of outgas when absorbed by, for example, a solid electrolyte-type lithium ion battery, and the sulfur-based gas is a component of outgas (for example, generated when the electrical storage device is an all-solid-state battery using a sulfide-based inorganic solid electrolyte, or a lithium secondary battery in which lithium-sulfur is used for the positive electrode).

In the first embodiment, the resin contained in the water absorbing layer is not particularly limited as long as the effect of the present disclosure is not impaired, and for example, a thermoplastic resin is preferable, and a heat-sealable resin is more preferable. Specific examples of the resin include resins such as polyester, polyolefin, polyamide, epoxy resin, acrylic resin, fluororesin, polyurethane, silicone resin and phenol resin, and modified products of these resins. The resin contained in the water absorbing layer may be a copolymer of these resins or a modified product of the copolymer. Further, a mixture of these resins may be used. Among them, heat-sealable resins such as polyester and polyolefin are preferable.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof. Among them, polybutylene terephthalate is particularly preferable from the viewpoint of enhancing the heat resistance and pressure resistance of the exterior material 1 for electrical storage devices (for example, deterioration of insulation quality (due to collapse caused by heat-sealing) in sealing of the electrical storage device with the exterior material 1 for electrical storage devices). When the heat-sealable resin layer 4 includes a water absorbing layer, the resin contained in the water absorbing layer is polybutylene terephthalate.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. These polyolefin-based resins may be used alone, or may be used in combination of two or more thereof.

In the first embodiment, the water absorbent contained in the water absorbing layer is not particularly limited as long as it exhibits a water absorbing property in a state of being dispersed in the resin film. For example, from the viewpoint of temporal stability in the electrical storage device, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity.

In the first embodiment, the content ratio of the resin contained in the water absorbing layer is, for example, 50 mass% or more, preferably 55 mass% or more, and more preferably 60 mass% or more.

In the first embodiment, the content of the water absorbent contained in the water absorbing layer is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the first embodiment, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

In the first embodiment, the layer on the inner side with respect to the barrier layer 3 may further contain a sulfur-based gas absorbent in addition to the water absorbent. In the present disclosure, a layer containing a sulfur-based gas absorbent is sometimes referred to as a "sulfur-based gas absorbing layer". When a sulfur-based gas absorbent is contained, the sulfur-based gas absorbent may be contained in the water absorbing layer, or may be contained in a layer free of a water absorbent. When the layer on the inner side with respect to the barrier layer 3 has two or more layers, it is preferable that the sulfur-based gas absorbent is contained in a layer free of a water absorbent and forms a sulfur-based gas absorbing layer.

In the first embodiment, when the layer on the inner side with respect to the barrier layer 3 further contains a sulfur-based gas absorbent in addition to the water absorbent, the sulfur-based gas absorbing layer is not particularly limited as long as it is located on the inner side with respect to the barrier layer 3. The sulfur-based gas absorbing layer is present preferably in at least one of the adhesive layer 5 and the heat-sealable resin layer 4, more preferably in the heat-sealable resin layer 4 which is an innermost layer. As described later, the heat-sealable resin layer 4 may be a single layer, or may have two or more layers. When the heat-sealable resin layer 4 includes a sulfur-based gas absorbing layer, the heat-sealable resin layer 4 is the sulfur-based gas absorbing layer if the heat-sealable resin layer 4 is a single layer, and at least one of layers forming the heat-sealable resin layer 4 is the sulfur-based gas absorbing layer if the heat-sealable resin layer 4 has two or more layers.

In the first embodiment, it is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more, 1.0 µm or more or the like, and preferably 15 µm or less, 10 µm or less, 8 µm or less or the like. The number average particle size of the powder is preferably in the range of about 0.1 to 15 µm, about 0.1 to 10 µm, about 0.1 to 8 µm, about 1 to 15 µm, about 1 to 10 µm, or about 1 to 8 µm. If the number average particle diameter is below the above-described range, the sulfur-based gas absorbent is likely to aggregate, and if the number average particle diameter is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2,000/1.

The hydrophobic zeolite is excellent in absorption of molecules having low polarity, such as a sulfur-based gas, and has a porous structure. In general, zeolite becomes more hydrophobic as the molar ratio of SiO₂ to Al₂O₃ increases, where SiO₂ and Al₂O₃ are constituent components of zeolite. More hydrophobic zeolite more easily absorbs molecules having low polarity, such as a sulfur-based gas, but has less affinity for molecules having high polarity, such as water, and hardly absorbs these molecules. The molar ratio of SiO₂ to Al₂O₃ of the hydrophobic zeolite is preferably 30/1 to 10,000/1, more preferably 35/1 to 9,000/1, still more preferably 40/1 to 8,500/1. Hydrophobic zeolite has high heat resistance, and thus can maintain an absorption effect even when exposed to a high temperature of 230°C or higher. In the present invention, hydrophobic zeolite having a molar ratio in the above-described range is preferably used from the viewpoint of the balance between the sulfur-based gas absorption capacity and availability.

Bentonite is an inorganic substance that contains montmorillonite, which is a clay mineral, as a main component, a large amount of layered aluminum phyllosilicate, and minerals such as quartz and feldspar as impurities. Examples of the bentonite include Na-type bentonite containing a large amount of Na⁺ ions, Ca-type bentonite containing a large amount of Ca²⁺ ions, and activated bentonite with Ca-type bentonite artificially converted into the Na-type by adding thereto several percents by weight of sodium carbonate.

Sepiolite is a clay mineral containing a hydrous magnesium silicic acid salt as a main component, and has a general chemical composition of Mg₈Si₁₂O₃₀(OH₂)₄(OH)₄·6-8H₂O, and has a porous structure. The pH (3% suspension) is preferably 8.0 to 9.0, more preferably 8.9 to 9.3 from the viewpoint of availability.

### (Chemical sulfur-based gas absorbent)

The chemical sulfur-based gas absorbent is a gas absorbent having an action of chemically absorbing and decomposing a sulfur-based gas to be absorbed. Due to chemical absorption or decomposition, there is little impact of water and the like, and once absorbed sulfur-based gas molecules are unlikely to be desorbed, so that absorption can be efficiently performed. The decomposition products are absorbed by a physical sulfur-based gas absorbent or a chemical sulfur-based gas absorbent. It is preferable that the chemical sulfur-based gas absorbent contains one or more selected from the group consisting of an inorganic substance carrying a metal oxide, glass containing a metal, and glass containing metal ions. It is preferable that the metal oxide in the inorganic substance carrying a metal oxide contains one or more selected from the group consisting of CuO, ZnO and AgO. The inorganic substance carrying a metal oxide is preferably an inorganic porous material such as zeolite. It is preferable that the metal in the glass containing a metal or the metal species of the metal ion in the glass containing metal ions contains one or more selected from the group consisting of Ca, Mg, Na, Cu, Zn, Ag, Pt, Au, Fe, Al and Ni.

In the first embodiment, the content of the sulfur-based gas absorbent contained in the sulfur-based gas absorbing layer is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less, still more preferably 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the first embodiment, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 5 to 60 mass%, more preferably about 10 to 50 mass%. As long as the content is in the above-described range, it is easy to incorporate a necessary and sufficient amount of the sulfur-based gas absorbent in the sulfur-based gas absorbing layer in a dispersed state.

In the first embodiment, examples of the resin contained in the sulfur-based gas absorbing layer include resins identical to those exemplified as resins contained in the water absorbing layer.

In the first embodiment, the content ratio of the resin contained in the sulfur-based gas absorbing layer is, for example, 60 mass% or more, preferably 65 mass% or more, and more preferably 70 mass% or more.

In the first embodiment, when a sulfur-based gas absorbent is contained in a layer on the inner side with respect to the barrier layer 3, the sulfur-based gas absorbent may be contained in the water absorbing layer or may be contained in a layer free of a water absorbent as described above. When the sulfur-based gas absorbent is contained in the water absorbing layer, the water absorbing layer also functions as a sulfur-based gas absorbing layer.

### [Sulfur-based gas absorbing layer]

The exterior material 10 for electrical storage devices according to the second embodiment of the present disclosure includes a sulfur-based gas absorbing layer on the inner side with respect to the barrier layer 3. The sulfur-based gas absorbing layer is a layer containing a sulfur-based gas absorbent.

As described above, ingress of moisture to the inside of the electrical storage device (electrical storage device element) may cause an increase in internal pressure of the electrical storage device due to generation of a sulfur-based gas, resulting in breakage of the electrical storage device. By providing the film-shaped exterior material with a barrier layer, ingress of moisture from the outside of the barrier layer can be suppressed. However, when a heat-sealable resin layer of the exterior material is heat-sealed to seal an electrical storage device element, ingress of moisture from an end surface of a layer on the inner side with respect to the barrier layer may occur because an end surface of the exterior material is exposed to the outside. If a layer of the exterior material on the inner side with respect to the barrier layer absorbs water before the electrical storage device element is sealed with the exterior material, moisture in a layer on the inner side with respect to the barrier layer may enter the electrical storage device element after the electrical storage device element is sealed.

To address this, in exterior material 10 for electrical storage devices according to the second embodiment of the present disclosure, a sulfur-based gas absorbing layer containing a sulfur-based gas absorbent is provided on the inner side with respect to the barrier layer 3 to suitably absorb a sulfur-based gas generated due to ingress of moisture to the inside of the electrical storage device 10. That is, even if a sulfur-based gas enters from a layer of the exterior material on the inner side with respect to the barrier layer, and is generated inside the electrical storage device, the exterior material 1 for electrical storage devices according to the present disclosure can absorb the sulfur-based gas to suppress an increase in internal pressure of the electrical storage device because a sulfur-based gas absorbing layer containing a sulfur-based gas absorbent is provided on the inner side with respect to the barrier layer 3.

In the second embodiment, the sulfur-based gas absorbing layer is not particularly limited as long as it is located on the inner side with respect to the barrier layer 3. The sulfur-based gas absorbing layer is present preferably in at least one of the adhesive layer 5 and the heat-sealable resin layer 4, more preferably in the heat-sealable resin layer 4 which is an innermost layer. As described later, the heat-sealable resin layer 4 may be a single layer, or may have two or more layers. When the heat-sealable resin layer 4 includes a sulfur-based gas absorbing layer, the heat-sealable resin layer 4 is the sulfur-based gas absorbing layer if the heat-sealable resin layer 4 is a single layer, and at least one of layers forming the heat-sealable resin layer 4 is the sulfur-based gas absorbing layer if the heat-sealable resin layer 4 has two or more layers.

In the second embodiment of the present disclosure, examples of the sulfur-based gas to be absorbed include hydrogen sulfide, dimethyl sulfide, methyl mercaptan, and sulfur oxide represented by SOx. As described later, the resin film for electrical storage devices according to the present disclosure may also target moisture for absorption if necessary. Moisture is moisture from gas and/or liquid. The moisture to be absorbed generates various kinds of outgas when absorbed by, for example, a solid electrolyte-type lithium ion battery, and the sulfur-based gas is a component of outgas (for example, generated when the electrical storage device is an all-solid-state battery using a sulfide-based inorganic solid electrolyte, or a lithium secondary battery in which lithium-sulfur is used for the positive electrode).

In the second embodiment, the resin contained in the sulfur-based gas absorbing layer is not particularly limited as long as the effect of the present disclosure is not impaired, and for example, a thermoplastic resin is preferable, and a heat-sealable resin is more preferable. Specific examples of the resin include resins such as polyester, polyolefin, polyamide, epoxy resin, acrylic resin, fluororesin, polyurethane, silicone resin and phenol resin, and modified products of these resins. The resin contained in the sulfur-based gas absorbing layer may be a copolymer of these resins or a modified product of the copolymer. Further, a mixture of these resins may be used. Among them, heat-sealable resins such as polyester and polyolefin are preferable.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof. Among them, polybutylene terephthalate is particularly preferable from the viewpoint of suppressing the heat resistance and pressure resistance of the exterior material 10 for electrical storage devices (for example, deterioration of insulation quality (due to collapse caused by heat-sealing) in sealing of the electrical storage device with the exterior material 10 for electrical storage devices). When the heat-sealable resin layer 4 includes a sulfur-based gas absorbing layer, the resin contained in the sulfur-based gas absorbing layer is polybutylene terephthalate.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. These polyolefin-based resins may be used alone, or may be used in combination of two or more thereof.

It is preferable that the sulfur-based gas absorbent contains a physical sulfur-based gas absorbent and/or a chemical sulfur-based gas absorbent. By using various kinds of sulfur-based gas absorbents in combination, for example, using a physical sulfur-based gas absorbent and a chemical sulfur-based gas absorbent in combination, many kinds of sulfur-based gases can be easily absorbed. The sulfur-based gas absorbent is used in the form of, for example, powder. The maximum particle size of the sulfur-based gas absorbent is preferably 20 µm or less, and the number average particle size of the powder is preferably 0.1 µm or more and 15 µm or less. If the number average particle diameter is below the above-described range, the sulfur-based gas absorbent is likely to aggregate, and if the number average particle diameter is above the above-described range, the sulfur-based gas absorbing film may be poor in homogeneity, and the surface area of the sulfur-based gas absorbent may decrease, resulting in poor sulfur-based gas absorption.

### (Physical sulfur-based gas absorbent)

The physical sulfur-based gas absorbent is a gas absorbent having an action of physically absorbing a sulfur-based gas to be absorbed. It is preferable that the physical sulfur-based gas absorbent contains one or more selected from the group consisting of hydrophobic zeolite, bentonite and sepiolite in which the molar ratio of SiO₂ to Al₂O₃ is 1/1 to 2,000/1.

Specific examples of the hydrophobic zeolite, bentonite and sepiolite are as described in the first embodiment, and the description thereof is omitted.

### (Chemical sulfur-based gas absorbent)

The chemical sulfur-based gas absorbent is a gas absorbent having an action of chemically absorbing and decomposing a sulfur-based gas to be absorbed. Due to chemical absorption or decomposition, there is little impact of water and the like, and once absorbed sulfur-based gas molecules are unlikely to be desorbed, so that absorption can be efficiently performed. The decomposition products are absorbed by a physical sulfur-based gas absorbent or a chemical sulfur-based gas absorbent. It is preferable that the chemical sulfur-based gas absorbent contains one or more selected from the group consisting of an inorganic substance carrying a metal oxide, glass containing a metal, and glass containing metal ions. It is preferable that the metal oxide in the inorganic substance carrying a metal oxide contains one or more selected from the group consisting of CuO, ZnO and AgO. The inorganic substance carrying a metal oxide is preferably an inorganic porous material such as zeolite. It is preferable that the metal in the glass containing a metal or the metal species of the metal ion in the glass containing metal ions contains one or more selected from the group consisting of Ca, Mg, Na, Cu, Zn, Ag, Pt, Au, Fe, Al and Ni.

In the second embodiment, the content of the sulfur-based gas absorbent contained in the sulfur-based gas absorbing layer is not particularly limited as long as the effect of the present disclosure is exhibited, and the content of the sulfur-based gas absorbent is preferably about 5 parts by mass or more, more preferably about 6 parts by mass or more, still more preferably about 7 parts by mass or more, and preferably about 60 parts by mass or less, more preferably about 55 parts by mass or less, still more preferably 50 parts by mass or less, still more preferably 30 parts by mass or less based on 100 parts by mass of the resin contained in the sulfur-based gas absorbing layer. The content is preferably in the range of 5 to 60 parts by mass, about 5 to 55 parts by mass, about 5 to 50 parts by mass, about 5 to 30 parts by mass, about 6 to 60 parts by mass, about 6 to 55 parts by mass, about 6 to 50 parts by mass, about 6 to 30 parts by mass, about 7 to 60 parts by mass, about 7 to 55 parts by mass, about 7 to 50 parts by mass, or about 7 to 30 parts by mass.

In the second embodiment, it is preferable that the sulfur-based gas absorbent is incorporated into the sulfur-based gas absorbing layer by way of a masterbatch obtained by melt-blending the sulfur-based gas absorbent with the resin. Specifically, it is preferable that the sulfur-based gas absorbent is melt-blended at a relatively high concentration with the resin to prepare a masterbatch, and the masterbatch and other components are then blended in a dry state so as to obtain a desired sulfur-based gas absorbent concentration in the sulfur-based gas absorbing layer. One or more sulfur-based gas absorbents and one or more resins may be melt-blended. The content of the sulfur-based gas absorbent in the masterbatch is preferably about 5 to 70 mass%, more preferably about 10 to 60 mass%. As long as the content is in the above-described range, it is easy to incorporate a necessary and sufficient amount of the sulfur-based gas absorbent in the sulfur-based gas absorbing layer in a dispersed state.

In the second embodiment, the layer on the inner side with respect to the barrier layer 3 may further contain a water absorbent in addition to the sulfur-based gas absorbent. In the present disclosure, a layer containing a water absorbent is sometimes referred to as a "water absorbing layer" as described above. In the second embodiment, when a water absorbing layer is present, the water absorbent may be contained in the sulfur-based gas absorbing layer, or may be contained in a layer free of a sulfur-based gas absorbent. When the layer on the inner side with respect to the barrier layer 3 has two or more layers, it is preferable that the water absorbent is contained in a layer free of a sulfur-based gas absorbent and forms a water absorbing layer.

In the second embodiment, the content ratio of the resin contained in the sulfur-based gas absorbing layer is, for example, 40 mass% or more, preferably 45 mass% or more, and more preferably 50 mass% or more.

In the second embodiment, the water absorbent contained in the water absorbing layer is not particularly limited as long as it exhibits a water absorbing property in a state of being dispersed in the resin film. For example, from the viewpoint of temporal stability in the electrical storage device, an inorganic water absorbent can be suitably used. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-batteries, is preferably an inorganic chemical absorbent which re-releases moisture in a high-temperature range.

In the second embodiment, the content of the water absorbent contained in the water absorbing layer is not particularly limited as long as the effect of the present disclosure is exhibited, and the content of the water absorbent is preferably about 0.5 parts by mass or more, more preferably about 2 parts by mass or more, still more preferably about 3 parts by mass or more, and preferably about 50 parts by mass or less, more preferably about 45 parts by mass or less, still more preferably 40 parts by mass or less, based on 100 parts by mass of the resin contained in the water absorbing layer. The content is preferably in the range of 0.5 to 50 parts by mass, about 0.5 to 45 parts by mass, about 0.5 to 40 parts by mass, about 2 to 50 parts by mass, about 2 to 45 parts by mass, about 2 to 40 parts by mass, about 3 to 50 parts by mass, about 3 to 45 parts by mass, or about 3 to 40 parts by mass.

In the second embodiment, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

In the second embodiment, when the layer on the inner side with respect to the barrier layer 3 further contains a water absorbent in addition to the sulfur-based gas absorbent, the water absorbing layer is not particularly limited as long as it is located on the inner side with respect to the barrier layer 3. The water absorbing layer is present preferably in at least one of the adhesive layer 5 and the heat-sealable resin layer 4, more preferably in the heat-sealable resin layer 4 which is an innermost layer. As described later, the heat-sealable resin layer 4 may be a single layer, or may have two or more layers. When the heat-sealable resin layer 4 includes a water absorbing layer, the heat-sealable resin layer 4 is the water absorbing layer if the heat-sealable resin layer 4 is a single layer, and at least one of layers forming the heat-sealable resin layer 4 is the water absorbing layer if the heat-sealable resin layer 4 has two or more layers.

In the second embodiment, examples of the resin contained in the water absorbing layer include resins identical to those exemplified as resins contained in the sulfur-based gas absorbing layer.

In the second embodiment, the content ratio of the resin contained in the water absorbing layer is, for example, 50 mass% or more, preferably 55 mass% or more, and more preferably 60 mass% or more.

In the second embodiment, when a water absorbent is contained in a layer on the inner side with respect to the barrier layer 3, the water absorbent may be contained in the sulfur-based gas absorbing layer or may be contained in a layer free of a sulfur-based gas absorbent as described above. When the water absorbent is contained in the sulfur-based gas absorbing layer, the sulfur-based gas absorbing layer also functions as a water absorbing layer.

### [Base material layer 1]

In the present disclosure, the base material layer 1 is a layer provided for the purpose of, for example, exhibiting a function as a base material of the exterior material for electrical storage devices. The base material layer 1 is located on the outer layer side of the exterior material for electrical storage devices.

The material for forming the base material layer 1 is not particularly limited as long as it has a function as a base material, i.e., at least insulation quality. The base material layer 1 can be formed using, for example, a resin, and the resin may contain additives described later.

When the base material layer 1 is formed of a resin, the base material layer 1 can be formed from, for example, a resin film formed of a resin. When the base material layer 1 is formed from a resin film, a resin film formed in advance may be used as the base material layer 1 in manufacturing of the exterior material 10 for electrical storage devices according to the present disclosure by laminating the base material layer 1 with the barrier layer 3. A resin for forming the base material layer 1 may be formed into a film on the surface of the barrier layer 3 or the like by extrusion molding, coating or the like to obtain the base material layer 1 formed of a resin film. Alternatively, the base material layer may be formed by applying a resin. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

It is preferable that the base material layer 1 contains any of these resins as a main component, more preferably polyester or polyamide as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the base material layer 1. For example, the phrase "the base material layer 1 contains polyester or polyamide as a main component" means that the content ratio of polyester or polyamide is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the base material layer 1.

Among the above-mentioned resins, polyester and polyamide are preferable, and polyester is more preferable (polyethylene terephthalate is particularly preferable) as the resin for forming the base material layer 1.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film.

The base material layer 1 may be a single layer, or may include two or more layers. When the base material layer 1 includes two or more layers, the base material layer 1 may be a laminate obtained by laminating resin films with an adhesive or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1.

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film. Since the polyester resin is hardly discolored even in the case where for example, an electrolytic solution is deposited on the surface, it is preferable that the polyester resin film is located at the outermost layer of the base material layer 1 when the base material layer 1 is a resin film laminate with two or more layers.

When the base material layer 1 is a resin film laminate with two or more layers, the two or more resin films may be laminated with an adhesive interposed therebetween. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 µm. In addition, the lamination may be performed with an anchor coat layer formed on the resin film. Examples of the anchor coat layer include the same adhesives as those exemplified for the adhesive agent layer 2 described later. Here, the thickness of the anchor coat layer is, for example, about 0.01 to 1.0 µm.

Additives such as a slipping agent, a flame retardant, an antiblocking agent, an antioxidant, a light stabilizer, a tackifier and an antistatic agent may be present on at least one of the surface of the base material layer 1 and/or inside the base material layer 1. The additives may be used alone, or may be used in combination of two or more thereof.

In the present disclosure, it is preferable that a slipping agent is present on the surface of the base material layer 1 from the viewpoint of enhancing the moldability of the exterior material for electrical storage devices. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof.

When the slipping agent is present on the surface of the base material layer 1, the amount of the slipping agent present is not particularly limited, and is preferably about 3 mg/m² or more, more preferably about 4 to 15 mg/m², still more preferably about 5 to 14 mg/m².

The slipping agent present on the surface of the base material layer 1 may be one obtained by exuding the slipping agent contained in the resin forming the base material layer 1, or one obtained by applying the slipping agent to the surface of the base material layer 1.

The thickness of the base material layer 1 is not particularly limited as long as a function as a base material is performed, and the thickness of the base material layer 1 is, for example, about 3 to 50 µm, preferably about 10 to 35 µm. When the base material layer 1 is a resin film laminate with two or more layers, the thickness of the resin film forming each layer is preferably about 2 to 25 µm.

### [Adhesive agent layer 2]

In the exterior material for electrical storage devices of the present disclosure, the adhesive agent layer 2 is a layer provided between the base material layer 1 and the barrier layer 3 if necessary for the purpose of enhancing bondability between these layers.

The adhesive agent layer 2 is formed from an adhesive capable of bonding the base material layer 1 and the barrier layer 3. The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a first component containing a polyol compound and a second component containing an isocyanate compound. The polyurethane adhesive is preferably a two-liquid curable polyurethane adhesive having polyol such as polyester polyol, polyether polyol or acrylic polyol as a first component, and aromatic or aliphatic polyisocyanate as a second component. Examples of the polyurethane adhesive include polyurethane adhesives containing an isocyanate compound and a polyurethane compound obtained by reacting a polyol compound with an isocyanate compound in advance. Examples of the polyurethane adhesive include polyurethane adhesives containing a polyol compound and a polyurethane compound obtained by reacting a polyol compound with an isocyanate compound in advance. Examples of the polyurethane adhesive include polyurethane adhesives obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. Since the adhesive agent layer 2 is formed of a polyurethane adhesive, excellent electrolytic solution resistance is imparted to the exterior material for electrical storage devices, so that peeling of the base material layer 1 is suppressed even if the electrolytic solution is deposited on the side surface.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the exterior material for electrical storage devices can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior material for electrical storage devices.

The average particle diameter of the pigment is not particularly limited, and is, for example, about 0.05 to 5 µm, preferably about 0.08 to 2 µm. The average particle size of the pigment is a median diameter measured by a laser diffraction/scattering particle size distribution measuring apparatus.

The content of the pigment in the adhesive agent layer 2 is not particularly limited as long as the exterior material for electrical storage devices is colored, and the content is, for example, about 5 to 60 mass%, preferably 10 to 40 mass%.

The thickness of the adhesive agent layer 2 is not particularly limited as long as the base material layer 1 and the barrier layer 3 can be bonded to each other, and the thickness is, for example, about 1 µm or more, or about 2 µm or more. The thickness of the adhesive agent layer 2 is, for example, about 10 µm or less, or about 5 µm or less. The thickness of the adhesive agent layer 2 is preferably in the range of about 1 to 10 µm, about 1 to 5 µm, about 2 to 10 µm, or about 2 to 5 µm.

### [Colored Layer]

The colored layer is a layer provided between the base material layer 1 and the barrier layer 3 if necessary (not shown). When the adhesive agent layer 2 is present, the colored layer may be provided between the base material layer 1 and the adhesive agent layer 2 or between the adhesive agent layer 2 and the barrier layer 3. The colored layer may be provided outside the base material layer 1. By providing the colored layer, the exterior material for electrical storage devices can be colored.

The colored layer can be formed by, for example, applying an ink containing a colorant to the surface of the base material layer 1, or the surface of the barrier layer 3. As the colorant, known colorants such as pigments and dyes can be used. The colorants may be used alone, or may be used in combination of two or more thereof.

Specific examples of the colorant contained in the colored layer include the same colorants as those exemplified in the section [Adhesive Agent Layer 2].

### [Barrier layer 3]

In the exterior material for electrical storage devices, the barrier layer 3 is a layer which suppresses at least ingress of moisture.

Examples of the barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 3 include resin films provided with at least one of these deposited films and resin layers. A plurality of barrier layers 3 may be provided. Preferably, the barrier layer 3 contains a layer formed of a metal material. Specific examples of the metal material forming the barrier layer 3 include aluminum alloys, stainless steel, titanium steel and steel sheets. When the metal material is used as a metal foil, it is preferable that the metal material includes at least one of an aluminum alloy foil and a stainless steel foil.

The aluminum alloy is more preferably a soft aluminum alloy foil formed of, for example, an annealed aluminum alloy from the viewpoint of improving the moldability of the exterior material for electrical storage devices, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain an exterior material for electrical storage devices which has more excellent moldability. When the content of iron is 9.0 mass% or less, it is possible to obtain an exterior material for electrical storage devices which is more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing an exterior material for electrical storage devices which is further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the barrier layer 3 is a metal foil, the barrier layer 3 may perform a function as a barrier layer suppressing at least ingress of moisture, and has a thickness of, for example, about 9 to 200 µm. The thickness of the barrier layer 3 is preferably about 85 µm or less, more preferably about 50 µm or less, still more preferably about 40 µm or less, particularly preferably about 35 µm or less. The thickness of the barrier layer 3 is preferably about 10 µm or more, more preferably about 20 µm or more, still more preferably about 25 µm or more. The total thickness of the barrier layer 3 is preferably in the range of about 10 to 85 µm, about 10 to 50 µm, about 10 to 40 µm, about 10 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. When the barrier layer 3 includes an aluminum alloy foil, the thickness of the barrier layer 3 is preferably about 45 µm or more, more preferably about 50 µm or more, still more preferably about 55 µm or more, and preferably about 85 µm or less, more preferably 75 µm or less, still more preferably 70 µm or less, from the viewpoint of imparting high moldability and high rigidity to the exterior material 10 for electrical storage devices. The thickness of the barrier layer 3 is preferably in the range of about 45 to 85 µm, about 45 to 75 µm, about 45 to 70 µm, about 50 to 85 µm, about 50 to 75 µm, about 50 to 70 µm, about 55 to 85 µm, about 55 to 75 µm, or about 55 to 70 µm. When the exterior material 10 for electrical storage devices has high moldability, deep drawing molding can be facilitated to contribute to an increase in capacity of the electrical storage device. When the capacity of the electrical storage device is increased, the weight of the electrical storage device increases, but the enhancement of the rigidity of the exterior material 10 for electrical storage devices can contribute to high hermeticity of the electrical storage device. In particular, when the barrier layer 3 includes a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 to 60 µm, about 10 to 50 µm, about 10 to 40 µm, about 10 to 30 µm, about 10 to 25 µm, about 15 to 60 µm, about 15 to 50 µm, about 15 to 40 µm, about 15 to 30 µm, or about 15 to 25 µm.

When the barrier layer 3 is a metal foil, it is preferable that a corrosion-resistant film is provided at least on a surface on a side opposite to the base material layer for preventing dissolution and corrosion. The barrier layer 3 may include a corrosion-resistant film on each of both surfaces. Here, the corrosion-resistant film refers to a thin film obtained by subjecting the surface of the barrier layer to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (e.g. acid resistance and alkali resistance) to the barrier layer. Specifically, the corrosion-resistant film means a film which improves the acid resistance of the barrier layer (acid-resistant film), a film which improves the alkali resistance of the barrier layer (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 3 is provided with the corrosion-resistant film, the barrier layer 3 is regarded as including the corrosion-resistant film.

The corrosion-resistant film exhibits the effects of preventing delamination between the barrier layer (e.g. an aluminum alloy foil) and the base material layer during molding of the exterior material for electrical storage devices; preventing dissolution and corrosion of the surface of the barrier layer, particularly dissolution and corrosion of aluminum oxide present on the surface of the barrier layer when the barrier layer is an aluminum alloy foil, by hydrogen fluoride generated by reaction of an electrolyte with moisture; improving the bondability (wettability) of the surface of the barrier layer; preventing delamination between the base material layer and the barrier layer during heat-sealing; and preventing delamination between the base material layer and the barrier layer during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present disclosure, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

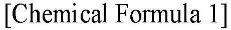

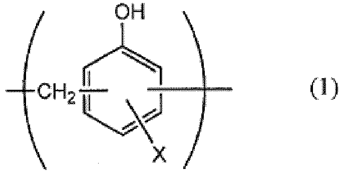

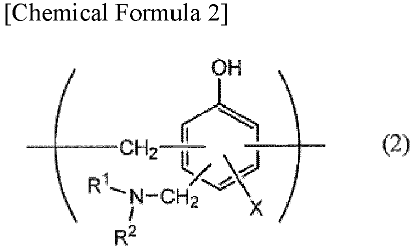

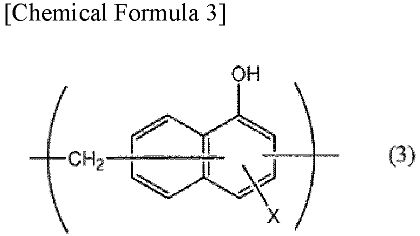

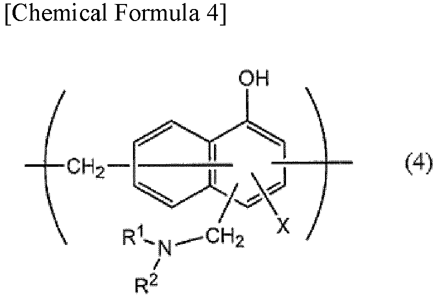

In the general formulae (1) to (4), X represents a hydrogen atom, a hydroxy group, an alkyl group, a hydroxyalkyl group, an allyl group, or a benzyl group. R¹ and R² are the same or different, and each represents a hydroxy group, an alkyl group, or a hydroxyalkyl group. In the general formulae (1) to (4), examples of the alkyl group represented by X, R¹ and R² include linear or branched alkyl groups with a carbon number of 1 to 4, such as a methyl group, an ethyl group, an n-propyl group, an isopropyl group, an n-butyl group, an isobutyl group, and a tert-butyl group. Examples of the hydroxyalkyl group represented by X, R¹ and R² include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, R¹ and R² may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate.

Examples of the corrosion-resistant film include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the barrier layer 3 in the chemical conversion treatment is not particularly limited, but for example when the coating-type chromate treatment is performed, and it is desirable that the chromic acid compound be contained in an amount of, for example, about 0.5 to 50 mg, preferably about 1.0 to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 to 150 mg, per 1 m² of the surface of the barrier layer 3.

The thickness of the corrosion-resistant film is not particularly limited, and is preferably about 1 nm to 20 µm, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected.

The chemical conversion treatment is performed in the following manner: a solution containing a compound to be used for formation of a corrosion-resistant film is applied to the surface of the barrier layer by a bar coating method, a roll coating method, a gravure coating method, an immersion method or the like, and heating is then performed so that the temperature of the barrier layer is about 70 to about 200°C. The barrier layer may be subjected to a degreasing treatment by an alkali immersion method, an electrolytic cleaning method, an acid cleaning method, an electrolytic acid cleaning method or the like before the barrier layer is subjected to a chemical conversion treatment. When a degreasing treatment is performed as described above, the chemical conversion treatment of the surface of the barrier layer can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

### [Heat-sealable resin layer 4]

In the exterior material for electrical storage devices according to the first embodiment of the present disclosure, the heat-sealable resin layer 4 is a layer (sealant layer) which corresponds to an innermost layer and performs a function of hermetically sealing the electrical storage device element by heat-sealing the heat-sealable resin layer during construction of the electrical storage device. The heat-sealable resin layer 4 can be formed from a sealant film.

As described above, in the first embodiment, the heat-sealable resin layer 4 is a layer on the inner side with respect to the barrier layer 3, and preferably includes the above-described water absorbing layer. When the heat-sealable resin layer 4 includes a water absorbing layer (or the heat-sealable resin layer 4 forms a water absorbing layer), the water absorbing layer of the heat-sealable resin layer 4 has the configuration described in the section [Water absorbing layer] above.

As described above, in the first embodiment, the heat-sealable resin layer 4 is a layer on the inner side with respect to the barrier layer 3, and may include the above-described sulfur-based gas absorbing layer. When the heat-sealable resin layer 4 includes a sulfur-based gas absorbing layer (or the heat-sealable resin layer 4 forms a sulfur-based gas absorbing layer), the sulfur-based gas absorbing layer of the heat-sealable resin layer 4 has the above-described configuration of the sulfur-based gas absorbing layer.

In the first embodiment of the present disclosure, the heat-sealable resin layer 4 is formed of a polybutylene terephthalate film. Therefore, in the first embodiment, when heat-sealable resin layer 4 includes a water absorbing layer, the water absorbing layer includes a polybutylene terephthalate film containing a water absorbent. Similarly, when the heat-sealable resin layer 4 includes a sulfur-based gas absorbing layer, the sulfur-based gas absorbing layer includes a polybutylene terephthalate film containing a sulfur-based gas absorbent.

As described above, in the second embodiment, the heat-sealable resin layer 4 is a layer on the inner side with respect to the barrier layer 3, and preferably includes the above-described sulfur-based gas absorbing layer. When the heat-sealable resin layer 4 includes a sulfur-based gas absorbing layer (or the heat-sealable resin layer 4 forms a sulfur-based gas absorbing layer), the sulfur-based gas absorbing layer of the heat-sealable resin layer 4 has the configuration described in the section [Sulfur-based gas absorbing layer] above.

As described above, in the second embodiment, the heat-sealable resin layer 4 is a layer on the inner side with respect to the barrier layer 3, and may include the water absorbing layer. When the heat-sealable resin layer 4 includes a water absorbing layer (or the heat-sealable resin layer 4 forms a water absorbing layer), the water absorbing layer of the heat-sealable resin layer 4 has the above-described configuration of the water absorbing layer.

In the second embodiment of the present disclosure, the heat-sealable resin layer 4 is formed of a polybutylene terephthalate film. Therefore, when the heat-sealable resin layer 4 includes a sulfur-based gas absorbing layer, the sulfur-based gas absorbing layer includes a polybutylene terephthalate film containing a sulfur-based gas absorbent. Similarly, when heat-sealable resin layer 4 includes a water absorbing layer, the water absorbing layer includes a polybutylene terephthalate film containing a water absorbent.

The exterior material 1 for electrical storage devices according to the present disclosure is excellent in heat resistance and pressure resistance because the heat-sealable resin layer 4 is formed of a polybutylene terephthalate film.

The polybutylene terephthalate film contains polybutylene terephthalate as a main component. Here, the main component means that the content ratio of polybutylene terephthalate is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the polybutylene terephthalate film.

In manufacturing of the exterior material 10 for electrical storage devices according to the present disclosure by laminating the heat-sealable resin layer 4 with the barrier layer 3, the adhesive layer 5 or the like, a polybutylene terephthalate film formed in advance may be used as the heat-sealable resin layer 4. A resin for forming the heat-sealable resin layer 4 may be formed into a film on the surface of the barrier layer 3, the adhesive layer 5 or the like by extrusion molding, coating or the like to obtain the heat-sealable resin layer 4 formed of a polybutylene terephthalate film.

In the present disclosure, the heat-sealable resin layer 4 may be a single layer as shown in, for example, Fig. 5, or may have two or more layers as shown in, for example, Figs. 6 and 7. Fig. 6 shows the heat-sealable resin layer 4 (sealant film) including a laminate in which a first layer 41 on the barrier layer side and a second layer 42 on the innermost layer side are laminated, and Fig. 7 shows the heat-sealable resin layer 4 (sealant film) including a laminate in which a third layer 43 on the barrier layer side, the first layer 41 located in the middle, and the second layer 42 on the innermost layer side are laminated in this order.

In the first embodiment, when the heat-sealable resin layer 4 (sealant film) has two or more layers, at least one of the two layers may form a water absorbing layer. Specific examples of the laminated configuration of the heat-sealable resin layer 4 (sealant film) include a laminated configuration in which the first layer 41 is a water absorbing layer and the second layer 42 is a layer free of a water absorbent in, for example, Fig. 6. In addition, examples of the laminated configuration of the heat-sealable resin layer 4 include a laminated configuration in which the second layer 42 is a water absorbing layer and the first layer 41 and the third layer 43 are layers free of a water absorbent; and a laminated configuration in which at least one of the first layer 41 and the third layer 43 is a water absorbing layer and the second layer 42 is a layer free of a water absorbent, in, for example, Fig. 7.

In the first embodiment, it is preferable to enhance the heat-sealing property of the heat-sealable resin layer 4 (sealant film), and therefore for example, when the heat-sealable resin layer 4 (sealant film) has three or more layers, a layer located at the innermost layer (on a side opposite to the barrier layer 3) (second layer 42 in Fig. 7) in the heat-sealable resin layer 4 (sealant film) is preferably free of a water absorbent (an inorganic water absorbent in particular). In the electrical storage device, it is preferable that the water absorbing layer is provided between layers located at the surface from the viewpoint of further suitably exhibiting the water absorbing performance of the water absorbing layer of the heat-sealable resin layer 4 (sealant film). This is because if the water absorbing layer is located at the surface, moisture in the atmosphere is absorbed before the electrical storage device is manufactured, so that the water absorption performance of the water absorbing layer is likely to be deteriorated. In the electrical storage device, it is also preferable that for the water absorbing layer, a layer located at the innermost layer (on a side opposite to the barrier layer 3) (second layer 42 in Fig. 7) is a water absorbing layer. This is because the third layer 43 is close to the electrical storage device elements 4, so that moisture contained in the electrical storage device element 4 is easily adsorbed.

In the first embodiment, the heat-sealable resin layer 4 (sealant film) may contain the above-described sulfur-based gas absorbent in addition to the water absorbent. When a sulfur-based gas absorbent is contained in the heat-sealable resin layer 4 (sealant film), the sulfur-based gas absorbent may be contained in the water absorbing layer, or may be contained in a layer free of a water absorbent. When the heat-sealable resin layer 4 (sealant film) has two or more layers, it is preferable that the sulfur-based gas absorbent is contained in a layer free of a water absorbent and forms a sulfur-based gas absorbing layer. If a single layer contains a plurality of kinds of particles, there may be a problem that particles are hardly dispersed during formation of the heat-sealable resin layer 4 (sealant film), so that the film is perforated, or the strength of the heat-sealable resin layer 4 (sealant film) varies depending on a site. If the amount of particles contained in a single layer exceeds a certain level, there may be a problem that elongation or strength of the heat-sealable resin layer 4 (sealant film) decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

In the first embodiment, when the heat-sealable resin layer 4 (sealant film) has two or more layers, specific examples of the laminated configuration of the heat-sealable resin layer 4 (sealant film) include a laminated configuration in which the first layer 41 is a water absorbing layer and the second layer 42 is a sulfur-based gas absorbing layer in, for example, Fig. 6. In addition, examples of the laminated configuration of the heat-sealable resin layer 4 include a laminated configuration in which the second layer 42 is a water absorbing layer and at least one of the first layer 41 and the third layer 43 is a sulfur-based gas absorbing layer; and a laminated configuration in which at least one of the first layer 41 and the third layer 43 is a water absorbing layer and the second layer 42 is a sulfur-based gas absorbing layer, in, for example, Fig. 7. Since hydrogen sulfide gas is generated from the electrical storage device element 4, the second layer 42 located on the electrical storage device element 4 side is preferably a sulfur-based gas absorbing layer. Among them, the laminated configuration in which the first layer 41 located between the second layer 42 and the third layer 43 is a water absorbing layer and the second layer 42 located on the electrical storage device element 4 side is a sulfur-based gas absorbing layer is most preferable because as described above, it is preferable that the water absorbing layer is provided between layers located at the surface.

In the first embodiment, the content ratio of the resin contained in the heat-sealable resin layer 4 (sealant film) is, for example, 50 mass% or more, preferably 55 mass% or more, and more preferably 60 mass% or more.

In the second embodiment, when the heat-sealable resin layer 4 (sealant film) has two or more layers, at least one of the two layers may form a sulfur-based gas absorbing layer. Specific examples of the laminated configuration of the heat-sealable resin layer 4 (sealant film) include a laminated configuration in which the first layer 41 on the barrier layer side is a sulfur-based gas absorbing layer and the second layer 42 as an innermost layer is a layer free of a sulfur-based gas absorbent; and a laminated configuration in which the first layer 41 is a layer free of a sulfur-based gas absorbing layer and the second layer 42 is a layer containing a sulfur-based gas absorbent, in, for example, Fig. 6. In addition, examples of the laminated configuration of the heat-sealable resin layer include a laminated configuration in which the first layer 41 located in the middle is a sulfur-based gas absorbing layer and the second layer 42 and the third layer 43 are layers free of a sulfur-based gas absorbent; a laminated configuration in which at least one of the first layer 41 and the third layer 43 is a sulfur-based gas absorbing layer and the second layer 42 is a layer free of a sulfur-based gas absorbent; a laminated structure in which the first layer 41 is a layer free of a sulfur-based gas absorbing layer and the second layer 42 and the third layer 43 are layers containing a sulfur-based gas absorbent; and a laminated configuration in which at least one of the first layer 41 and the third layer 43 is a layer free of a sulfur-based gas absorbing layer and the second layer 42 is a layer containing a sulfur-based gas absorbent, in, for example, Fig. 7. Since hydrogen sulfide gas is generated from the electrical storage device element 4, the second layer 42 located on the electrical storage device element 4 side is preferably a sulfur-based gas absorbing layer. Among them, the laminated configuration in which the first layer 41 located between the second layer 42 and the third layer 43 is a water absorbing layer and the second layer 42 located on the electrical storage device element 4 side is a sulfur-based gas absorbing layer is most preferable because as described above, it is preferable that the water absorbing layer is provided between layers located at the surface.

In the second embodiment, it is preferable to enhance the heat-sealing property of the heat-sealable resin layer 4 (sealant film), and therefore for example, when the heat-sealable resin layer 4 (sealant film) has three or more layers, a layer located at the innermost layer (on a side opposite to the barrier layer 3) (second layer 42 in Fig. 7) in the heat-sealable resin layer 4 (sealant film) is preferably free of a sulfur-based gas absorbent.

In the second embodiment, the heat-sealable resin layer 4 (sealant film) may contain the above-described water absorbent in addition to the sulfur-based gas absorbent. When a water absorbent is contained in the heat-sealable resin layer 4 (sealant film), the water absorbent may be contained in the sulfur-based gas absorbing layer, or may be contained in a layer free of a sulfur-based gas absorbent. When the heat-sealable resin layer 4 (sealant film) has two or more layers, it is preferable that the water absorbent is contained in a layer free of a sulfur-based gas absorbent and forms a water absorbing layer. If a single layer contains a plurality of kinds of particles, there may be a problem that particles are hardly dispersed during formation of the heat-sealable resin layer 4 (sealant film), so that the film is perforated, or the strength of the heat-sealable resin layer 4 (sealant film) varies depending on a site. If the amount of particles contained in a single layer exceeds a certain level, there may be a problem that elongation or strength of the heat-sealable resin layer 4 (sealant film) decreases, so that the film is likely to be broken by a corner of the battery, or the like. Even though a water absorbent and a sulfur-based gas absorbent are contained in a single layer, the above-mentioned problems are unlikely to occur as long as the content of the absorbents is small, but for maintaining the water absorption effect and the sulfur-based gas absorption effect over a long period of time, the water absorbing layer and the sulfur-based gas absorbing layer are preferably separate layers.

In the second embodiment, when the heat-sealable resin layer 4 (sealant film) has two or more layers, specific examples of the laminated configuration of the heat-sealable resin layer 4 (sealant film) include a laminated configuration in which the first layer 41 on the barrier layer side is a sulfur-based gas absorbing layer and the second layer 42 is a water absorbing layer in, for example, Fig. 6. In addition, examples of the laminated configuration of the heat-sealable resin layer 4 include a laminated configuration in which the first layer 41 is a sulfur-based gas absorbing layer and at least one of the second layer 42 and the third layer 43 is a water absorbing layer; and a laminated configuration in which at least one of the first layer 41 and the third layer 43 is a sulfur-based gas absorbing layer and the second layer 42 is a water absorbing layer, in, for example, Fig. 7. In the electrical storage device, it is preferable that the water absorbing layer is provided between layers located at the surface from the viewpoint of further suitably exhibiting the water absorbing performance of the water absorbing layer of the resin film 1 for electrical storage devices. This is because if the water absorbing layer is located at the surface, moisture in the atmosphere is absorbed before the electrical storage device is manufactured, so that the water absorption performance of the water absorbing layer is likely to be deteriorated. The laminated configuration in which the first layer 11 located between the second layer 12 and the third layer 13 is a water absorbing layer described later and the second layer 12 located on the electrical storage device element 4 side is a sulfur-based gas absorbing layer is most preferable. In the electrical storage device, it is also preferable that for the water absorbing layer, the third layer 13 located on the exterior material 3 side is a water absorbing layer. This is because the third layer 13 is close to the exterior material 3, so that moisture entering from the exterior material 3 side is easily adsorbed. In the electrical storage device, it is also preferable that for the water absorbing layer, the second layer 12 located on the electrical storage device element 4 side is a water absorbing layer. This is because the second layer 12 is close to the electrical storage device elements 4, so that moisture contained in the electrical storage device element 4 is easily adsorbed.

In the present disclosure, the heat-sealable resin layer 4 may contain a slipping agent etc. if necessary. When the heat-sealable resin layer 4 contains a slipping agent, the moldability of the exterior material for electrical storage devices can be improved. The slipping agent is not particularly limited, and a known slipping agent can be used. The slipping agents may be used alone, or may be used in combination of two or more thereof.

The slipping agent is not particularly limited, and is preferably an amide-based slipping agent. Specific examples of the slipping agent include those exemplified for the base material layer 1. The slipping agents may be used alone, or may be used in combination of two or more thereof.

When a slipping agent is present on the surface of the heat-sealable resin layer 4, the amount of the slipping agent present is not particularly limited, and is preferably about 10 to 50 mg/m², more preferably about 15 to 40 mg/m² from the viewpoint of improving the moldability of the exterior material for electrical storage devices.

The slipping agent present on the surface of the heat-sealable resin layer 4 may be one obtained by exuding the slipping agent contained in the resin forming the heat-sealable resin layer 4, or one obtained by applying a slipping agent to the surface of the heat-sealable resin layer 4.

The thickness of the heat-sealable resin layer 4 is not particularly limited as long as the heat-sealable resin layers are heat-sealed to each other to perform a function of sealing the electrical storage device element, and the thickness is, for example, about 100 µm or less, preferably about 85 µm or less, more preferably about 15 to 85 µm. For example, when the thickness of the adhesive layer 5 described later is 10 µm or more, the thickness of the heat-sealable resin layer 4 is preferably about 85 µm or less, more preferably about 15 to 45 µm. For example, when the thickness of the adhesive layer 5 described later is less than 10 µm or the adhesive layer 5 is not provided, the thickness of the heat-sealable resin layer 4 is preferably about 20 µm or more, more preferably about 35 to 85 µm.

### (Method for manufacturing heat-sealable resin layer (sealant film))

The method for manufacturing the heat-sealable resin layer 4 (sealant film) as long as the heat-sealable resin layer 4 (sealant film) is obtained, and a known or conventional film formation method and lamination method may be applied. The heat-sealable resin layer 4 (sealant film) can be manufactured by, for example, a known film formation method and/or lamination method such as an extrusion method, a coextrusion method, a cast molding method, a T-die method, a cutting method or an inflation method. When the heat-sealable resin layer 4 (sealant film) has two or more layers, for example, films for forming the layers, which are produced in advance, may be laminated with an adhesive agent layer interposed therebetween, a molten resin composition may be laminated by an extrusion or co-extrusion method on a layer formed in advance, a plurality of layers may be laminated by melting and press-bonding while being produced in parallel, or one or more resins may be applied onto another layer, and dried to perform coating.

In the first embodiment, a layer to be incorporated in the heat-sealable resin layer 4 (sealant film), such as a water absorbing layer (sulfur-based gas absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a water absorbing layer (or a sulfur-based gas absorbing layer), which is formed in advance, may be laminated and bonded with an adhesive layer laminated by an extrusion coating method, a dry lamination method, a non-solvent lamination method or the like. Subsequently, aging treatment may be performed if necessary.

For example, when a water absorbing layer or the like is laminated by an extrusion coating method in the first embodiment, first, a resin composition for forming the layer is heated and melted, expanded and stretched in a necessary width direction by a T-die, and (co-)extruded into a curtain shape, and the molten resin is caused to flow down to a lamination surface, and sandwiched between a rubber roll and a cooled metal roll. In this way, the layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K 7210.

In the first embodiment, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

In the second embodiment, a layer to be incorporated in the heat-sealable resin layer 4 (sealant film), such as a sulfur-based gas absorbing layer (water absorbing layer), can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film for a sulfur-based gas absorbing layer (or a water absorbing layer), which is formed in advance, may be laminated and bonded with an adhesive layer laminated by an extrusion coating method, a dry lamination method, a non-solvent lamination method or the like. Subsequently, aging treatment may be performed if necessary.

For example, when a sulfur-based gas absorbing layer or the like is laminated by an extrusion coating method in the second embodiment, first, a resin composition for forming the layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K 7210.

In the second embodiment, the melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

If necessary, desired surface treatment can be applied to the surface of each layer between the layers forming the heat-sealable resin layer 4 (sealant film) in advance for improving bondability. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

Each layer forming the heat-sealable resin layer 4 (sealant film) can be further uniaxially stretched or biaxially stretched by a heretofore known method using a tenter method, a tubular method or the like if necessary.

### [Adhesive Layer 5]

In the exterior material for electrical storage devices according to the present disclosure, the adhesive layer 5 is a layer provided between the barrier layer 3 (or corrosion-resistant film) and the heat-sealable resin layer 4 if necessary for firmly bonding these layers to each other.

As described above, in the first embodiment, the adhesive layer 5 is a layer on the inner side with respect to the barrier layer 3, and may include the water absorbing layer. When the adhesive layer 5 includes a water absorbing layer (or the adhesive layer 5 forms a water absorbing layer), the water absorbing layer of the adhesive layer 5 has the configuration described in the section [Water absorbing layer] above.

In the first embodiment, the adhesive layer 5 is a layer on the inner side with respect to the barrier layer 3, and may include the sulfur-based gas absorbing layer. When the adhesive layer 5 includes a sulfur-based gas absorbing layer (or the adhesive layer 5 forms a sulfur-based gas absorbing layer), the sulfur-based gas absorbing layer of the adhesive layer 5 has the above-described configuration of the sulfur-based gas absorbing layer.

As described above, in the second embodiment, the adhesive layer 5 is a layer on the inner side with respect to the barrier layer 3, and may include the sulfur-based gas absorbing layer. When the adhesive layer 5 includes a sulfur-based gas absorbing layer (or the adhesive layer 5 forms a sulfur-based gas absorbing layer), the sulfur-based gas absorbing layer of the adhesive layer 5 has the configuration described in the section [Sulfur-based gas absorbing layer] above.

In the second embodiment, the adhesive layer 5 is a layer on the inner side with respect to the barrier layer 3, and may include the water absorbing layer. When the adhesive layer 5 includes a water absorbing layer (or the adhesive layer 5 forms a water absorbing layer), the water absorbing layer of the adhesive layer 5 has the above-described configuration of the water absorbing layer.

The adhesive layer 5 is formed from a resin capable of bonding the barrier layer 3 and the heat-sealable resin layer 4 to each other. The resin to be used for forming the adhesive layer 5 is, for example, the same as that of the adhesive exemplified for the adhesive agent layer 2. From the viewpoint of firmly bonding the adhesive layer 5 to the heat-sealable resin layer 4, it is preferable that the resin to be used for forming the adhesive layer 5 contains a polyolefin backbone. Examples thereof include the polyolefins and acid-modified polyolefins exemplified for the heat-sealable resin layer 4 described above. On the other hand, from the viewpoint of firmly bonding the barrier layer 3 and the adhesive layer 5 to each other, it is preferable that the adhesive layer 5 contains an acid-modified polyolefin. Examples of the acid modifying component include dicarboxylic acids such as maleic acid, itaconic acid, succinic acid and adipic acid, anhydrides thereof, acrylic acid, and methacrylic acid, and maleic anhydride is most preferable from the viewpoint of ease of modification, general-purpose property, and the like. From the viewpoint of the heat resistance of the exterior material for electrical storage devices, the olefin component is preferably a polypropylene-based resin, and it is most preferable that the adhesive layer 5 contains maleic anhydride-modified polypropylene.

When a resin containing a polyolefin backbone is used for formation of the adhesive layer 5, the adhesive layer 5 preferably contains a resin containing a polyolefin backbone as a main component, more preferably contains acid-modified polyolefin as a main component, still more preferably contains acid-modified polypropylene as a main component. Here, the main component means a resin component, the content ratio of which is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesive layer 5. For example, the phrase "the adhesive layer 5 contains acid-modified polypropylene as a main component" means that the content ratio of acid-modified polypropylene is, for example, 50 mass% or more, preferably 60 mass% or more, more preferably 70 mass% or more, still more preferably 80 mass% or more, still more preferably 90 mass% or more, still more preferably 95 mass% or more, still more preferably 98 mass% or more, still more preferably 99 mass% or more with respect to resin components contained in the adhesive layer 5.

The resin forming the adhesive layer 5 can be confirmed to contain a polyolefin backbone by an analysis method such as infrared spectroscopy, gas chromatography-mass spectrometry, and the analysis method is not particularly limited. The resin forming the adhesive layer 5 is confirmed to contain an acid-modified polyolefin, for example, when peaks derived from maleic anhydride are detected near wavenumbers of 1760 cm⁻¹ and 1780 cm⁻¹ when a maleic anhydride-modified polyolefin is measured by infrared spectroscopy. However, if the degree of acid modification is low, the peaks may be too small to be detected. In that case, the peaks can be analyzed by nuclear magnetic resonance spectroscopy.

Further, from the viewpoint of securing durability, such as heat resistance and content resistance and securing moldability, of the exterior material for electrical storage devices while reducing the thickness, the adhesive layer 5 is more preferably a cured product of a resin composition containing an acid-modified polyolefin and a curing agent. Preferred examples of the acid-modified polyolefin include those described above.

The adhesive layer 5 is preferably a cured product of a resin composition containing an acid-modified polyolefin and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group. Preferably, the adhesive layer 5 preferably contains at least one selected from the group consisting of polyurethane, polyester and epoxy resin. More preferably, the adhesive layer 5 contains polyurethane and epoxy resin. As the polyester, for example, an ester resin produced by reaction of an epoxy group with a maleic anhydride group, or an amide ester resin produced by reaction of an oxazoline group with a maleic anhydride group is preferable. When an unreacted substance of a curing agent, such as a compound having an isocyanate group, a compound having an oxazoline group, or an epoxy resin remains in the adhesive layer 5, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 3 and the adhesive layer 5, the adhesive layer 5 is preferably a cured product of a resin composition containing a curing agent having at least one selected from the group consisting of an oxygen atom, a heterocyclic ring, a C=N bond, and a C-O-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the present invention, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the barrier layer 3 and the adhesive layer 5 in an atmosphere including a component which induces corrosion of the barrier layer, such as an electrolytic solution.

When the adhesive layer 5 is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The adhesive layer 5 may contain a modifier having a carbodiimide group.

In manufacturing of the exterior material 10 for electrical storage devices according to the present disclosure by laminating the adhesive layer 5 with the barrier layer 3, the heat-sealable resin layer 4 or the like, a resin film formed in advance may be used as the adhesive layer 5. A heat-sealable resin for forming the adhesive layer 5 may be formed into a film on the surface of the barrier layer 3, the heat-sealable resin layer 4 or the like by extrusion molding, coating or the like to obtain the adhesive layer 5 formed of a resin film.

It is also preferable that the adhesive layer 5 is formed from a cured product of a resin composition containing at least one of polyester and polycarbonate and at least one of an alicyclic isocyanate compound and an aromatic isocyanate compound.

The polyester is preferably polyester polyol. The polyester polyol is not particularly limited as long as it has an ester bond in the polymer main chain and a plurality of hydroxyl groups at the terminal or the side chain. The polycarbonate is preferably polycarbonate polyol. The polyester polyol is not particularly limited as long as it has a carbonate bond in the polymer main chain and a plurality of hydroxyl groups at the terminal or the side chain. One type or two or more types of each of the polyester and the polycarbonate may be contained in the resin composition forming the adhesive layer 5.

The alicyclic isocyanate compound is not particularly limited as long as it is a compound having an alicyclic structure and an isocyanate group. It is preferable that the alicyclic isocyanate compound has two or more isocyanate groups. Specific examples of the alicyclic isocyanate compound include isophorone diisocyanate (IPDI) etc., polymerized or nurated products thereof, mixtures thereof, and copolymers of these compounds with other polymers. Examples thereof include adduct forms, biuret forms, and isocyanurate forms. One type or two or more types of the alicyclic isocyanate compound may be contained in the resin composition forming the adhesive layer 5.

The alicyclic isocyanate compound is not particularly limited as long as it is a compound having an aromatic ring and an isocyanate group. It is preferable that the aromatic isocyanate compound has two or more isocyanate groups. Specific examples of the aromatic isocyanate compound include tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms. One type or two or more types of the aromatic isocyanate compound may be contained in the resin composition forming the adhesive layer 5.

When the resin composition that forms the adhesive layer 5 contains at least one of an alicyclic isocyanate compound and an aromatic isocyanate compound, for example, the resin composition may contain an alicyclic isocyanate compound while being free of an aromatic isocyanate compound, or for example, the resin composition may contain an aromatic isocyanate compound while being free of an alicyclic isocyanate compound, or for example, the resin composition may contain both an alicyclic isocyanate compound and an aromatic isocyanate compound.

The content of each of the alicyclic isocyanate compound and the aromatic isocyanate compound in the adhesive layer 5 is preferably in the range of 0.1 to 50 mass%, more preferably in the range of 0.5 to 40 mass% in the resin composition forming the adhesive layer 5. When the adhesive layer 5 contains both the alicyclic isocyanate compound and the aromatic isocyanate compound, the total content thereof is preferably in the range of 0.1 to 50 mass%, more preferably in the range of 0.5 to 40 mass% in the resin composition forming the adhesive layer 5.

The thickness of the adhesive layer 5 is preferably about 50 µm or less, about 40 µm or less, about 30 µm or less, about 20 µm or less, or about 5 µm or less. The thickness of the adhesive layer 5 is preferably about 0.1 µm or more, or about 0.5 µm or more. The thickness of the adhesive layer 5 is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm, or about 0.5 to 5 µm. More specifically, the thickness is preferably about 1 to 10 µm, more preferably about 1 to 5 µm in the case of the adhesive exemplified for the adhesive agent layer 2 or a cured product of an acid-modified polyolefin with a curing agent. When any of the resins exemplified for the heat-sealable resin layer 4 is used, the thickness of the adhesive layer is preferably about 2 to 50 µm, more preferably about 10 to 40 µm. When the adhesive layer 5 is a cured product of a resin composition containing the adhesive exemplified for the adhesive agent layer 2 or an acid-modified polyolefin and a curing agent, the adhesive layer 5 can be formed by, for example, applying the resin composition and curing the resin composition by heating or the like. When the resin exemplified for the heat-sealable resin layer 4 is used, for example, extrusion molding of the heat-sealable resin layer 4 and the adhesive layer 5 can be performed.

### [Surface Coating Layer 6]

The exterior material for electrical storage devices according to the present disclosure may include a surface coating layer 6 on the base material layer 1 (on a side opposite to the barrier layer 3 from the base material layer 1) if necessary for the purpose of improving at least one of designability, electrolytic solution resistance, scratch resistance, moldability and the like. The surface coating layer 6 is a layer located on the outermost layer side of the exterior material for electrical storage devices when the power storage device is constructed using the exterior material for electrical storage devices.

Examples of the resin for forming the surface coating layer 6 include resins such as polyvinylidene chloride, polyester, polyamide, epoxy resin, acrylic resin, fluororesin, polyurethane, silicone resin and phenol resin, and modified products of these resins. The resin may be a copolymer of these resins or a modified product of the copolymer. Further, a mixture of these resins may be used. The resin is preferably a curable resin. That is, it is preferable that the surface coating layer 6 includes a cured product of a resin composition containing a curable resin.

When the resin forming the surface coating layer 6 is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a first component containing a polyol compound and a second component containing an isocyanate compound. The polyurethane is preferably a two-liquid curable polyurethane adhesive having polyol such as polyester polyol, polyether polyol or acrylic polyol as a first component, and aromatic or aliphatic polyisocyanate as a second component. Examples of the polyurethane include polyurethane containing an isocyanate compound and a polyurethane compound obtained by reacting a polyol compound with an isocyanate compound in advance. Examples of the polyurethane include polyurethane containing a polyurethane compound and a polyurethane compound obtained by reacting a polyol compound with an isocyanate compound in advance. Examples of the polyurethane include polyurethane obtained by reacting a polyol compound with an isocyanate compound to form a polyurethane compound in advance, and reacting the polyurethane compound with moisture in the air or the like. It is preferable that polyester polyol having a hydroxyl group in the side chain in addition to a hydroxyl group at the end of the repeating unit is used as the polyol compound. Examples of the second component include aliphatic, alicyclic, aromatic and araliphatic isocyanate-based compounds. Examples of the isocyanate-based compound include hexamethylene diisocyanate (HDI), xylylene diisocyanate (XDI), isophorone diisocyanate (IPDI), hydrogenated XDI (H6XDI), hydrogenated MDI (H 12 MDI), tolylene diisocyanate (TDI), diphenylmethane diisocyanate (MDI) and naphthalene diisocyanate (NDI). Examples of the isocyanate-based compound also include polyfunctional isocyanate-modified products of one or more of these diisocyanates can be mentioned. It is also possible to use a multimer (e.g. a trimer) as the polyisocyanate compound. Examples of the multimer include adducts, biurets, and nurates. The aliphatic isocyanate-based compound is an isocyanate having an aliphatic group and having no aromatic ring, the alicyclic isocyanate-based compound is an isocyanate having an alicyclic hydrocarbon group, and the aromatic isocyanate-based compound is an isocyanate having an aromatic ring. Since the surface coating layer 6 is formed of polyurethane, excellent electrolytic solution resistance is imparted to the exterior material for electrical storage devices.

If necessary, the surface coating layer 6 may contain additives such as the slipping agent, an anti-blocking agent, a matting agent, a flame retardant, an antioxidant, a tackifier and an anti-static agent on at least one of the surface and the inside of the surface coating layer 6 according to the functionality and the like to be imparted to the surface coating layer 6 and the surface thereof. The additives are in the form of, for example, fine particles having an average particle diameter of about 0.5 nm to 5 µm. The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 6 is not particularly limited, and examples thereof include a method in which a resin for forming the surface coating layer 6 is applied. When the additive is added to the surface coating layer 6, a resin mixed with the additive may be applied.

The thickness of the surface coating layer 6 is not particularly limited as long as the above-mentioned function as the surface coating layer 6 is performed, and it is, for example, about 0.5 to 10 µm, preferably about 1 to 5 µm.

### 3. Method for manufacturing Exterior Material for Electrical Storage Devices

The method for producing an exterior material for electrical storage devices is not particularly limited as long as a laminate is obtained in which the layers of the exterior material for electrical storage devices according to the present invention are laminated. Examples thereof include a method including the step of laminating at least the base material layer 1, the barrier layer 3 and the heat-sealable resin layer 4 in this order.

An example of the method for manufacturing the exterior material for electrical storage devices of the present invention is as follows. First, a laminate including the base material layer 1, the adhesive agent layer 2 and the barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the barrier layer 3, the surface of which is subjected to a chemical conversion treatment if necessary, using a coating method such as a gravure coating method or a roll coating method, and dried, the barrier layer 3 or the base material layer 1 is then laminated, and the adhesive agent layer 2 is cured.

Then, the heat-sealable resin layer 4 is laminated on the barrier layer 3 of the laminate A. When the heat-sealable resin layer 4 is laminated directly on the barrier layer 3, the heat-sealable resin layer 4 may be laminated onto the barrier layer 3 of the laminate A by a method such as a thermal lamination method or an extrusion lamination method. When the adhesive layer 5 is provided between the barrier layer 3 and the heat-sealable resin layer 4, mention is made of, for example, (1) a method in which the adhesive layer 5 and the heat-sealable resin layer 4 are extruded to be laminated on the barrier layer 3 of the laminate A (extrusion lamination method or tandem lamination method); (2) a method in which the adhesive layer 5 and the heat-sealable resin layer 4 are laminated to form a laminate separately, and the laminate is laminated on the barrier layer 3 of the laminate A by a thermal lamination method, or a method in which a laminate with the adhesive layer 5 laminated on the barrier layer 3 of the laminate A is formed, and laminated to the heat-sealable resin layer 4 by a thermal lamination method; (3) a method in which the melted adhesive layer 5 is poured between the barrier layer 3 of the laminate A and the heat-sealable resin layer 4 formed in a sheet shape beforehand, and simultaneously the laminate A and the heat-sealable resin layer 4 are bonded to each other with the adhesive layer 5 interposed therebetween (sandwich lamination); and (4) an adhesive for forming the adhesive layer 5 is applied by solution coating and dried or baked to laminate the adhesive on the barrier layer 3 of the laminate A, and the heat-sealable resin layer 4 formed in a sheet shape in advance is laminated on the adhesive layer 5.

When the surface coating layer 6 is provided, the surface coating layer 6 is laminated on a surface of the base material layer 1 on a side opposite to the barrier layer 3. The surface coating layer 6 can be formed by, for example, coating a surface of the base material layer 1 with the resin that forms the surface coating layer 6. The order of the step of laminating the barrier layer 3 on a surface of the base material layer 1 and the step of laminating the surface coating layer 6 on a surface of the base material layer 1 is not particularly limited. For example, the surface coating layer 6 may be formed on a surface of the base material layer 1, followed by forming the barrier layer 3 on a surface of the base material layer 1 on a side opposite to the surface coating layer 6.

As described above, a laminate including the surface coating layer 6 provided if necessary, the base material layer 1, the adhesive agent layer 2 provided if necessary, the barrier layer 3, the adhesive layer 5 provided if necessary, and the heat-sealable resin layer 4 in this order is formed, and the laminate may be further subjected to a heating treatment for strengthening the bondability of the adhesive agent layer 2 and the adhesive layer 5 provided if necessary.

In the exterior material for electrical storage devices, the layers forming the laminate may be subjected to surface activation treatment such as corona treatment, blast treatment, oxidation treatment or ozone treatment if necessary to improve processing suitability. For example, by subjecting a surface of the base material layer 1, which is opposite to the barrier layer 3, to a corona treatment, the ink printability of the surface of the base material layer 1 can be improved.

### 4. Uses of Exterior Material for Electrical Storage Devices

The exterior material for electrical storage devices according to the present disclosure is used as a packaging for hermetically sealing and storing electrical storage device elements such as a positive electrode, a negative electrode, and an electrolyte. That is, in a packaging formed of the exterior material for electrical storage devices of the present disclosure, an electrical storage device element including at least a positive electrode, a negative electrode, and an electrolyte can be housed to obtain an electrical storage device.

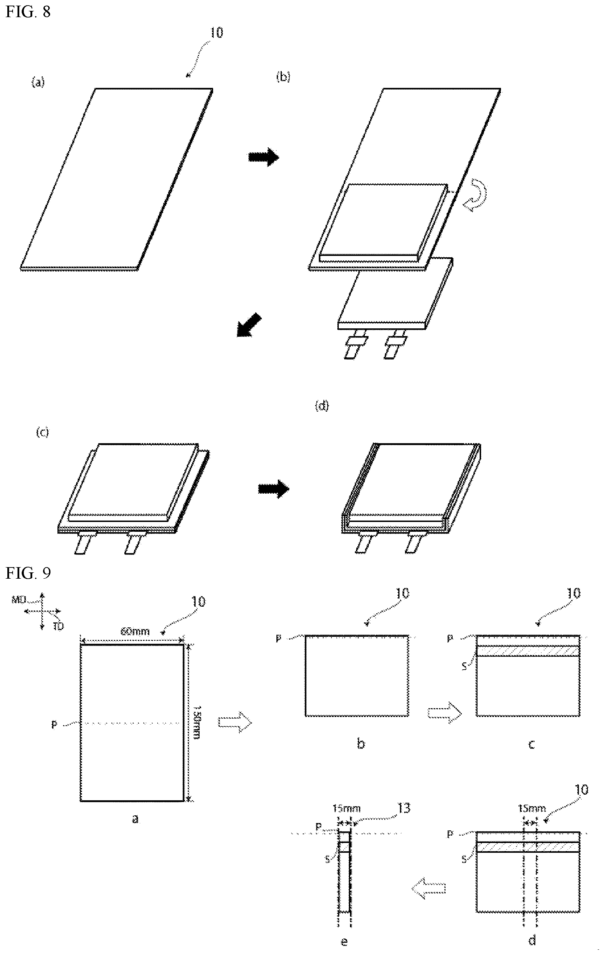

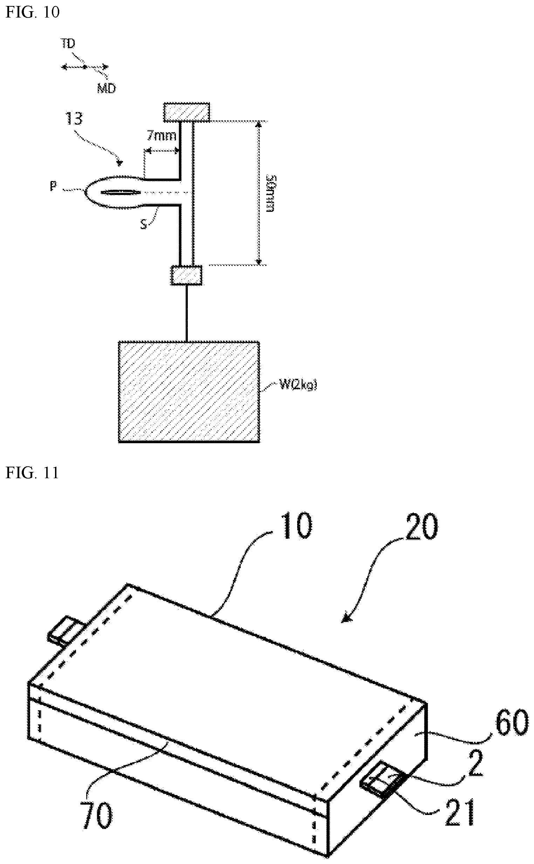

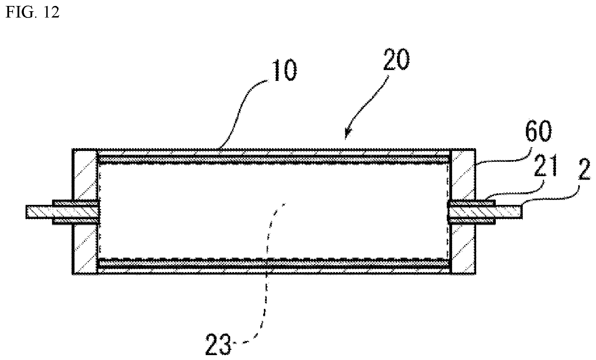

Specifically, an electrical storage device element including at least a positive electrode, a negative electrode, and an electrolyte is covered with the exterior material for electrical storage devices according to the present disclosure such that a flange portion (region where a heat-sealable resin layer is in contact with itself) can be formed on the periphery of the electrical storage device element while a metal terminal connected to each of the positive electrode and the negative electrode protrudes to the outside, and the heat-sealable resin layer at the flange portion is heat-sealed with itself, thereby providing an electrical storage device using the exterior material for electrical storage devices. When the electrical storage device element is housed in the packaging formed of the exterior material for electrical storage devices according to the present disclosure, the packaging is formed in such a manner that the heat-sealable resin portion of the exterior material for electrical storage devices according to the present disclosure is on the inner side (a surface contacting the electrical storage device element). The heat-sealable resin layers of two exterior materials for electrical storage devices may be superposed in such a manner as to face each other, followed by heat-sealing the peripheral edge portions of the superposed exterior materials for electrical storage devices to form a packaging. Alternatively, as in the example shown in Fig. 8, one exterior material for electrical storage devices may be folded over itself, followed by heat-sealing the peripheral edge portions to form a packaging. When the exterior material is folded over itself, a packaging may be formed by three-side sealing with the exterior material heat-sealed at sides other than the folding side as in the example shown in Fig. 8, or may be subjected to four-side sealing with the exterior material folded in such a manner that a flange portion can be formed. In the exterior material for electrical storage devices, a concave portion for housing an electrical storage device element may be formed by deep drawing molding or bulging molding. As in the example shown in Fig. 8, one exterior material for electrical storage devices may be provided with a concave portion while the other exterior material for electrical storage devices is not provided a concave portion, or the other exterior material for electrical storage devices may also be provided with a concave portion. As shown in, for example, Figs. 11 and 12, the exterior material 10 for electrical storage devices is wound around the circumference of the electrical storage device element 23 (circumferential winding) (rectangular parallelepiped shape in Figs. 11 and 12) such that the heat-sealable resin layer of the exterior material 10 for electrical storage devices is on the inner side, the heat-sealable resin layers are heat-sealed to each other to form a heat-sealed portion 70, and a lid 60 is disposed so as to close the openings at both ends.

The exterior material for electrical storage devices according to the present disclosure can be suitably used for electrical storage devices such as batteries (including condensers, capacitors and the like.). The exterior material for electrical storage devices according to the present disclosure may be used for either primary batteries or secondary batteries, and is preferably used for secondary batteries. The type of secondary battery to which the exterior material for electrical storage devices according to the present disclosure is applied is not particularly limited, and examples thereof include lithium ion batteries, lithium ion polymer batteries, all-solid-state batteries, semi-solid-state batteries, pseudo-solid-state batteries, polymer batteries, all polymer batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. The exterior material for electrical storage devices according to the present disclosure is suitably applied to lithium ion batteries, lithium ion polymer batteries and all-solid-state batteries, among the batteries mentioned above, and is particularly suitably used for all-solid-state batteries.

### EXAMPLES

The present disclosure will be described in detail below by giving examples and comparative examples related to the first embodiment of the present disclosure.

However, the present disclosure is not limited to examples.

### <Water absorbent and sulfur-based gas absorbent>

Water absorbents and sulfur-based gas absorbents used in examples are as follows.

### <Water absorbent>

- Calcium oxide: HAL-J, calcium oxide manufactured by Yoshikawa Lime Industry Co., Ltd. average particle size: 1 to 2 µm.
- Magnesium oxide: STARMAG PSF-150, magnesium oxide manufactured by Konoshima Chemical Co., Ltd. average particle size: 0.6 µm.
- Zeolite: MIZUKASIEVES SAP, zeolite manufactured by Mizusawa Industrial Chemicals, Ltd. molar ratio of SiO to Al₂O₃: 2/1, average particle size: 5 µm.
- Aluminum oxide: A33F (SA30 series), aluminum oxide manufactured by Nippon Light Metal Company, Ltd. average particle size: 2 µm.

### [Chemical sulfur-based gas absorbent]

- Copper oxide/zinc oxide combined aluminosilicate: Dushlite CZU, metal oxide-carrying inorganic porous material manufactured by Sinanen Zeomic Co., Ltd. average particle size: 3 to 5 µm.

### <Manufacturing of PBT masterbatch>

Each PBT masterbatch was prepared by uniformly mixing heated and melted polybutylene terephthalate (PBT) and each water absorbent so as to meet the composition (mass ratio) shown in Table 1A. Four types of PBT masterbatches, i.e., "PBT MB1", "PBT MB2", "PBT MB3" and "PBT MB4" were obtained. The masterbatches each have a pellet shape.

**[Table 1A]**

| Table 1A | | PBT masterbatch | | | |
|---|---|---|---|---|---|
| | | PBT MB 1 | PBT MB2 | PBT MB3 | PBT MB4 |
| PBT (parts by mass) | | 40 | 40 | 40 | 40 |
| Water absorbent (parts by mass) | Calcium oxide | 60 | - | - | - |
| | Magnesium oxide | - | 60 | - | - |
| | Zeolite | - | - | 60 | - |
| | Aluminum oxide | - | - | - | 60 |

### <Manufacturing of sealant film>

### (Examples 1A to 15A and Comparative Example 1A)

Sealant films (each having a total thickness of 40 µm), whose heat-sealable resin layer laminated configurations are shown in Table 2A, were manufactured by extrusion molding. In the heat-sealable resin layer, a layer containing an absorbent was a water absorbing layer. The water absorbing layer was formed by heating and melting and uniformly mixing each of the obtained PBT masterbatches (pellets) and polybutylene terephthalate (PBT) so as to meet the formulation (mass ratio) shown in Table 2A, and extrusion-molding the mixture. Layers other than the water absorbing layer is a layer formed of polybutylene terephthalate (PBT). Those layers were formed by extrusion molding together with the water absorbing layer (co-extrusion molding). In the laminated configuration of the sealant film (heat-sealable resin layer), the first layer is disposed on the barrier layer side, the third layer is an innermost layer, and the second layer is a layer located between the first layer and the third layer. The sealant films of Examples 1A to 4A and 7A to 14A have a three-layered configuration in which a first layer, a second layer and a third layer are laminated in this order. In Examples 1A to 4A, 7A to 11A, 14A and 15A, the second layer was a water absorbing layer. In Example 12A, the third layer was a water absorbing layer. In Example 13A, the first layer was a water absorbing layer. Example 5A had a two-layered configuration in which a second layer and a third layer are laminated, with the second layer being a water absorbing layer. Example 6A had a single-layered configuration with a second layer, with the second layer being a water absorbing layer. In Comparative Example 1A, the sealant film (heat-sealable resin layer) does not contain an absorbent.

In Example 10A, the first layer was a sulfur-based gas absorbing layer, and in Example 11A, the third layer was a sulfur-based gas absorbing layer, and a sulfur-based gas absorbing property was imparted to the third layer. Each of the sulfur-based gas absorbing layers was formed by uniformly mixing 60 parts by mass of heated and melted PBT and 40 parts by mass of copper oxide/zinc oxide combined aluminosilicate as a chemical sulfur-based gas absorbent to prepare each PBT masterbatch, heating and melting and uniformly mixing the obtained PBT masterbatch (pellet) and polybutylene terephthalate (PBT), and extrusion-molding the mixture. The content of the sulfur-based gas absorbent in the sulfur-based gas absorbing layer was set to 5 mass%.

### <Evaluation>

### [Film formability]

The appearance of the sealant film was visually observed, and whether or not there were defects was evaluated on the basis of the following evaluation criteria. The results are shown in Table 2A.
A: There were no wrinkles, bumps and delamination in the laminate.
C: There were wrinkles, bumps and/or delamination in the laminate.

### [Relative humidity and sulfur-based gas concentration]

The sealant film was cut into 20 × 20 cm, and 1,000 ml of a test gas adjusted to a relative humidity of 80% RH or more and 30 ppm of hydrogen sulfide and 50 ppm of dimethyl sulfide as sulfur-based gas components, and a humidity data logger (TR-72wf from T&D Corporation) were put in a gas sampling back (SMARTBAGPA series manufactured by GL Sciences Inc.), and left standing at 25°C for 2 days, i.e., 48 hours, followed by measurement of the relative humidity and the concentrations of hydrogen sulfide and dimethyl sulfide. The concentrations of hydrogen sulfide and dimethyl sulfide were measured with a detection tube.

### <Manufacturing of exterior material>

As the base material layer, a polyethylene terephthalate film (thickness: 25 µm or 12 µm) in which a surface to be bonded had been corona-treated, and a nylon film (thickness: 25 µm) were provided. In addition, an aluminum alloy foil (JIS H4160: 1994 A8021 H-O (thickness: 40 µm)) was provided as a barrier layer. As the heat-sealable resin layer, the sealant films described above were used. Next, using a two-liquid curable urethane adhesive (polyester polyol and alicyclic isocyanate compound), the base material layer and the barrier layer were bonded to each other by a dry lamination method to produce a laminate in which a base material layer, an adhesive agent layer and a barrier layer were laminated in this order. The type and thickness of the base material layer are as shown in Table 2.

Next, for each of Examples 1A to 13A and Comparative Example 1A, the barrier layer of the obtained laminate and the sealant film were bonded to each other with an adhesive C: a two-liquid curable urethane adhesive (polyester polyol and alicyclic isocyanate compound) by a dry lamination method to laminate an adhesive layer (4 µm) and a heat-sealable resin layer (40 µm) on the barrier layer. Next, the obtained laminate was aged and heated to obtain an exterior material for electrical storage devices including a laminate in which a base material layer, an adhesive agent layer, a barrier layer, an adhesive layer and a heat-sealable resin layer (sealant film) were laminated in this order.

For each of Example 14A and Example 15A, the barrier layer of the obtained laminate and the sealant film were bonded to each other with an adhesive A and an adhesive B (both of which are polyolefin-based adhesive resins, with the adhesive A having a Vicat softening point of 110°C and the adhesive B having a Vicat softening point of 120°C) by a sandwich lamination method to laminate an adhesive layer (15 µm)/heat-sealable resin layer (40 µm) on the barrier layer. Next, the obtained laminate was subjected to lamination while being heated, thereby obtaining an exterior material for electrical storage devices including a laminate in which a base material layer, an adhesive agent layer, a barrier layer, an adhesive layer and a heat-sealable resin layer (sealant film) were laminated in this order.

### <Evaluation of sealing strength (25°C or 120°C)>

As shown in the schematic diagram of Fig. 9, the exterior materials of Examples 1A to 15A and Comparative Example 1A were each cut into one piece having a size of 6 cm in width and 15 cm in length (Fig. 9a). Next, for each of the examples and comparative examples, one exterior material was doubled over at the center in the length direction (MD) to obtain a laminate. Here, the heat-sealable resin layers of the exterior material faced each other (Fig. 9b). Next, a region of 6 cm × 7 mm of the obtained laminate was heat-sealed from both sides of the laminate under the following conditions using a heat seal tester (TP-701-A manufactured by Tester Sangyo Co., Ltd.) (Fig. 9c). An end part of the laminate was not bonded because it was not heat-sealed. Thus, a forked test piece for peeling strength was produced. The test piece was cut into a strip shape with a width of 15 mm (Figs. 9d and 9e), each of the two separate end parts was attached to a tensile tester as shown in the schematic diagram of Fig. 10, the peeling strength (N/15 mm) was measured under the following conditions, and acceptance-rejection assessment was performed on the basis of the following acceptance-rejection criteria. The results are shown in Table 2A. When the measurement was performed at 120°C, a sample was placed, and left standing until the thermostatic bath reached 120°C, followed by start of the measurement.

### (Heat-sealing conditions)

Temperature: 240°C
Pressure: 1 MPa
Time: 3 sec

### (Peeling conditions)

Test speed: 300 mm/min
Chuck-to-chuck distance: 50 mm.
Load range: 50 N
Temperature: 25°C or 120°C

### (Acceptance-rejection criteria)

A: Very good and acceptable, with a peeling strength of 40 N/15 mm or more
B: Acceptable, with a peeling strength of 30 N/15 mm or more and less than 40 N/15 mm
C: Unacceptable, with a peeling strength of less than 30 N/15 mm

### <Evaluation of lamination strength (25°C or 120°C)>

The exterior material was cut into a size of 15 mm in width and 100 mm in length. Next, at an end part of the exterior material (at a position of 15 mm in width), the exterior material was delaminated so that it is possible to grip the heat-sealable resin layer and the barrier layer with a tool, thereby producing a test piece. The heat-sealable resin layer and the barrier layer were gripped with the tool of a tensile tester, the peeling strength (N/15 mm) was measured under the following conditions, and acceptance-rejection assessment was performed on the basis of the following acceptance-rejection criteria. The results are shown in Table 2A.

### (Peeling conditions)

Test speed: 50 mm/min
Chuck-to-chuck distance: 50 mm.
Load range: 20 N
Temperature: 25°C or 120°C

### (Acceptance-rejection criteria)

A+: Very good and acceptable, with a peeling strength of 10 N/15 mm or more
A: Acceptable, with a peeling strength of 4 N/15 mm or more and less than 10 N/15 mm
B: Acceptable, with a peeling strength of 3 N/15 mm or more and less than 4 N/15 mm
C: Unacceptable, with a peeling strength of less than 3 N/15 mm

### <Evaluation of heat resistance and pressure resistance (insulation quality)>

Using the obtained exterior materials, insulation quality was evaluated by the following procedure. The exterior materials were each cut into two pieces of 30 mm square. Next, the heat-sealable resin layers of the two exterior materials were brought into contact with each other, and a stainless steel sheet (3 mm in thickness, 26 mm square) was sandwiched between the two exterior materials. Next, a metal wire having a diameter of 25 µm was inserted between one of the exterior materials and the stainless steel sheet to obtain a laminate. Next, a pressure of 100 MPa was applied from both sides of the exterior material of the obtained laminate using a restricting tool, and in this state, the laminate was put in an oven at 120°C, and stored for 6 hours. A cushioning material was inserted between the restraint jig and the exterior material on each side so that pressure was uniformly applied to the laminate from both sides of the exterior material. After 6 hours, the exterior material was observed to confirm whether the metal wire was in contact with the barrier layer of the exterior material, and insulation quality was evaluated on the basis of the following criteria. The results are shown in Table 2. As for whether or not the metal wire was in contact with the barrier layer after the heat and pressure test was conducted, the sample after the test was cut in the thickness direction using a microtome (REM-710 Retoratome manufactured by YAMATO KOKI INDUSTRIAL CO., LTD.), and the obtained cross-section was observed with a laser microscope (VK-9700 manufactured by KEYENCE CORPORATION).
A: The barrier layer of the exterior material and the metal wire are not in contact with each other.
C: The barrier layer of the exterior material and the metal wire are in contact with each other.

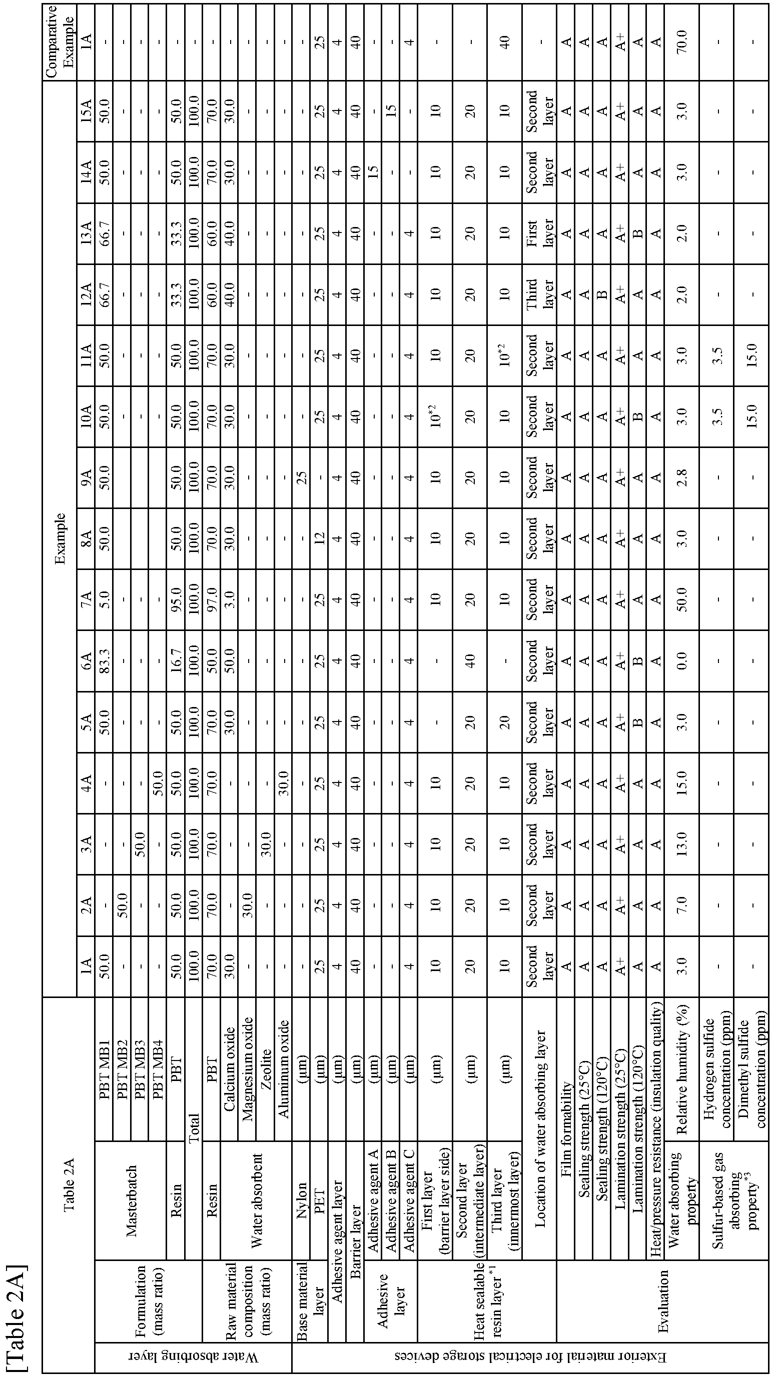

* 1 In the laminated configuration of the heat-sealable resin layer (sealant film) shown in Table 2A, the first layer is disposed on the barrier layer side, and the third layer is an innermost layer.
*2 In Examples 10A and 11A, a sulfur-based gas absorbent is blended in a layer different from the water absorbing layer. In Example 10A, a sulfur-based gas absorbent is blended in the first layer, and in Example 11A, a sulfur-based gas absorbent is blended in the third layer.
*3 The sulfur-based gas absorbability was evaluated only for Examples 10A and 11A.

Hereinafter, the present disclosure will be described in detail by way of examples and comparative examples. However, the present disclosure is not limited to examples.

### [Chemical sulfur-based gas absorbent]

- Chemical sulfur-based gas absorbent 1: Dushlite CZU, metal oxide-carrying inorganic porous material manufactured by Sinanen Zeomic Co., Ltd. Copper oxide/zinc oxide combined aluminosilicate average particle size: 3 to 5 µm.
- Chemical sulfur-based gas absorbent 2: Dushlite ZU, metal oxide-carrying inorganic porous material manufactured by Sinanen Zeomic Co., Ltd. Zinc oxide combined aluminosilicate average particle size: 3 to 5 µm.
- Chemical sulfur-based gas absorbent 3: DEOGLA, copper-kneaded glass manufactured by Ishizuka Glass Co., Ltd. average particle size: 3 to 4 µm.

### [Physical sulfur-based gas absorbent]

- Physical sulfur-based gas absorbent 1: MIZUKASIEVES EX-122, hydrophobic zeolite manufactured by Mizusawa Industrial Chemicals, Ltd. molar ratio of SiO₂ to Al₂O₃: 32/1, average particle size: 2.5 to 5.5 µm.
- Physical sulfur-based gas absorbent 2: SILTON MT100, hydrophobic zeolite manufactured by Mizusawa Industrial Chemicals, Ltd. molar ratio of SiO₂ to Al₂O₃: 100/1, average particle size: 3 to 4.5 µm.
- Physical sulfur-based gas absorbent 3: SILTON MT400, hydrophobic zeolite manufactured by Mizusawa Industrial Chemicals, Ltd. molar ratio of SiO₂ to Al₂O₃: 400/1, average particle size: 5 to 7 µm.
- Physical sulfur-based gas absorbent 4: BENCLAY MK-101, bentonite manufactured by Mizusawa Industrial Chemicals, Ltd. average particle size: 4.5 µm, pH = 10.4.
- Physical sulfur-based gas absorbent 5: ADEPLUS FJ, hydrophobic zeolite manufactured by Mizusawa Industrial Chemicals, Ltd. average particle size: 5.8 µm, pH = 9.3.

### <Manufacturing of PBT masterbatch>

Each PBT masterbatch was prepared by uniformly mixing heated and melted polybutylene terephthalate (PBT) and each sulfur-based gas absorbent so as to meet the composition (mass ratio) shown in Table 1B. Eight types of PBT masterbatches, i.e., "PBT MB1" "PBT MB2", "PBT MB3", "PBT MB4", "PBT MB5", "PBT MB6", "PBT MB7" and "PBT MB8" were obtained. The masterbatches each have a pellet shape.

**[Table 1B]**

| Table 1B | | | PBT masterbatch | | | | | | | |
|---|---|---|---|---|---|---|---|---|---|---|
| | | | PBT MB1 | PBT MB2 | PBT MB3 | PBT MB4 | PBT MB5 | PBT MB6 | PBT MB7 | PBT MB8 |
| PBT (parts by mass) | | | 60 | 60 | 60 | 60 | 60 | 60 | 60 | 60 |
| Sulfur-based gas absorbent (parts by mass) | Chemical sulfur-based gas absorbent | 1 | 40 | - | - | - | - | - | - | - |
| | | 2 | - | 40 | - | - | - | - | - | - |
| | | 3 | - | - | 40 | - | - | - | - | - |
| | Physical sulfur-based gas absorbent | 1 | - | - | - | 40 | - | - | - | - |
| | | 2 | - | - | - | - | 40 | - | - | - |
| | | 3 | - | - | - | - | - | 40 | - | - |
| | | 4 | - | - | - | - | - | - | 40 | - |
| | | 5 | - | - | - | - | - | - | - | 40 |

### <Manufacturing of sealant film>

### (Examples 1B to 12B and Comparative Example 1B)

Sealant films (each having a total thickness of 40 µm), whose heat-sealable resin layer laminated configurations are shown in Table 2B, were manufactured by extrusion molding. In the heat-sealable resin layer, a layer containing a sulfur-based gas absorbent was a sulfur-based gas absorbing layer. The sulfur-based gas absorbing layer was formed by heating and melting and uniformly mixing each of the obtained PBT masterbatches (pellets) and polybutylene terephthalate (PBT) so as to meet the formulation (mass ratio) shown in Table 2B, and extrusion-molding the mixture. Layers other than the sulfur-based gas absorbing layer is a layer formed of polybutylene terephthalate (PBT). Those layers were formed by extrusion molding together with the sulfur-based gas absorbing layer (co-extrusion molding). In the laminated configuration of the sealant film (heat-sealable resin layer), the first layer is disposed on the barrier layer side, the third layer is an innermost layer, and the second layer is a layer located between the first layer and the third layer. The sealant films of Examples 1B to 8B, 11B and 12B have a three-layered configuration in which a first layer, a second layer and a third layer are laminated in this order, and in Examples 1B to 8B, 11B and 12B, the second layer was a sulfur gas absorbing layer. Example 9B had a two-layered configuration in which a second layer and a third layer are laminated, with the second layer being a sulfur gas absorbing layer. Example 10B had a single-layered configuration with a second layer, with the second layer being a sulfur gas absorbing layer. In Comparative Example 1B, the sealant film (heat-sealable resin layer) does not contain an absorbent.

### <Evaluation>

### [Film formability]

The appearance of the sealant film was visually observed, and whether or not there were defects was evaluated on the basis of the following evaluation criteria. The results are shown in Table 2B.
A: There were no wrinkles, bumps and delamination in the laminate.
C: There were wrinkles, bumps and/or delamination in the laminate.

### <Sulfur-based gas concentration>

The sealant film was cut into 20 × 20 cm, and 1,000 ml of a test gas adjusted to a relative humidity of 80% RH or more and 30 ppm of hydrogen sulfide and 50 ppm of dimethyl sulfide as sulfur-based gas components, and a humidity data logger (TR-72wf from T&D Corporation) were put in a gas sampling back (SMARTBAGPA series manufactured by GL Sciences Inc.), and left standing at 25°C for 2 days, i.e., 48 hours, followed by measurement of the relative humidity and the concentrations of hydrogen sulfide and dimethyl sulfide. The concentrations of hydrogen sulfide and dimethyl sulfide were measured with a detection tube.

### <Manufacturing of exterior material>

In Examples 1B to 11B and Comparative Example 1B, a polyethylene terephthalate film (thickness: 25 µm) in which a surface to be bonded had been corona-treated was used as a base material layer. In Example 12B, a laminated film obtained by laminating a polyethylene terephthalate film (thickness: 12 µm) and a nylon film (thickness: 15 µm) with a two-liquid curable urethane resin (thickness after curing: 3 µm) was used as a base material layer. The laminated film was used with the nylon film being on the barrier layer side. An aluminum alloy foil (JIS H4160: 1994 A8021 H-O (thickness: 40 µm)) was prepared as a barrier layer. As the heat-sealable resin layer, the sealant films described above were used. Next, using a two-liquid curable urethane adhesive (polyester polyol and alicyclic isocyanate compound), the base material layer and the barrier layer were bonded to each other by a dry lamination method to produce a laminate in which a base material layer, an adhesive agent layer and a barrier layer were laminated in this order. The type and thickness of the base material layer are as shown in Table 2B.

Next, using an adhesive A: polyolefin-based adhesive resin, the obtained laminate on the barrier layer side and the sealant film were bonded to each other by a sandwich lamination method to laminate an adhesive layer (15 µm) and a heat-sealable resin layer (40 µm) on the barrier layer. Next, the obtained laminate was aged and heated to obtain an exterior material for electrical storage devices including a laminate in which a base material layer, an adhesive agent layer, a barrier layer, an adhesive layer and a heat-sealable resin layer (sealant film) were laminated in this order.

### <Evaluation of sealing strength (25°C or 120°C)>

As shown in the schematic diagram of Fig. 9, the exterior materials of Examples 1B to 12B and Comparative Example 1B were each cut into one piece having a size of 6 cm in width and 15 cm in length (Fig. 9a). Next, for each of the examples and comparative examples, one exterior material was doubled over at the center in the length direction (MD) to obtain a laminate. Here, the heat-sealable resin layers of the exterior material faced each other (Fig. 9b). Next, a region of 6 cm × 7 mm of the obtained laminate was heat-sealed from both sides of the laminate under the following conditions using a heat seal tester (TP-701-A manufactured by Tester Sangyo Co., Ltd.) (Fig. 9c). An end part of the laminate was not bonded because it was not heat-sealed. Thus, a forked test piece for peeling strength was produced. The test piece was cut into a strip shape with a width of 15 mm (Figs. 9d and 9e), each of the two separate end parts was attached to a tensile tester as shown in the schematic diagram of Fig. 10, the peeling strength (N/15 mm) was measured under the following conditions, and acceptance-rejection assessment was performed on the basis of the following acceptance-rejection criteria. The results are shown in Table 2B. When the measurement was performed at 120°C, a sample was placed, and left standing until the thermostatic bath reached 120°C, followed by start of the measurement.

### (Heat-sealing conditions)

Temperature: 240°C
Pressure: 1 MPa
Time: 3 sec

### (Peeling conditions)

Test speed: 300 mm/min
Chuck-to-chuck distance: 50 mm.
Load range: 50 N
Temperature: 25°C or 120°C

When the measurement was performed at 120°C, a sample was placed, and then left standing until the thermostatic bath reached 120°C, followed by start of the measurement.

### (Acceptance-rejection criteria)

A: Acceptable, with a peeling strength of 40 N/15 mm or more
B: Acceptable, with a peeling strength of 30 N/15 mm or more and less than 40 N/15 mm
C: Unacceptable, with a peeling strength of less than 30 N/15 mm

### <Evaluation of lamination strength (25°C or 120°C)>

The exterior material was cut into a size of 15 mm in width and 100 mm in length. Next, at an end part of the exterior material (at a position of 15 mm in width), the exterior material was delaminated so that it is possible to grip the heat-sealable resin layer and the barrier layer with a tool, thereby producing a test piece. The heat-sealable resin layer and the barrier layer were gripped with the tool of a tensile tester, the peeling strength (N/15 mm) was measured under the following conditions, and acceptance-rejection assessment was performed on the basis of the following acceptance-rejection criteria. The results are shown in Table 2B.

### (Peeling conditions)

Test speed: 50 mm/min
Chuck-to-chuck distance: 50 mm.
Load range: 20 N
Temperature: 25°C or 120°C

When the measurement was performed at 120°C, a sample was placed, and then left standing until the thermostatic bath reached 120°C, followed by start of the measurement.

### (Acceptance-rejection criteria)

A+: Very good and acceptable, with a peeling strength of 10 N/15 mm or more
A: Acceptable, with a peeling strength of 4 N/15 mm or more and less than 10 N/15 mm
B: Acceptable, with a peeling strength of 3 N/15 mm or more and less than 4 N/15 mm
C: Unacceptable, with a peeling strength of less than 3 N/15 mm

### <Evaluation of heat resistance and pressure resistance (insulation quality)>

Using the obtained exterior materials, insulation quality was evaluated by the following procedure. The exterior materials were each cut into two pieces of 30 mm square. Next, the heat-sealable resin layers of the two exterior materials were brought into contact with each other, and a stainless steel sheet (3 mm in thickness, 26 mm square) was sandwiched between the two exterior materials. Next, a metal wire having a diameter of 25 µm was inserted between one of the exterior materials and the stainless steel sheet to obtain a laminate. Next, a pressure of 100 MPa was applied from both sides of the exterior material of the obtained laminate using a restricting tool, and in this state, the laminate was put in an oven at 120°C, and stored for 6 hours. A cushioning material was inserted between the restraint jig and the exterior material on each side so that pressure was uniformly applied to the laminate from both sides of the exterior material. After 6 hours, the exterior material was observed to confirm whether the metal wire was in contact with the barrier layer of the exterior material, and insulation quality was evaluated on the basis of the following criteria. The results are shown in Table 2. As for whether or not the metal wire was in contact with the barrier layer after the heat and pressure test was conducted, the sample after the test was cut in the thickness direction using a microtome (REM-710 Retoratome manufactured by YAMATO KOKI INDUSTRIAL CO., LTD.), and the obtained cross-section was observed with a laser microscope (VK-9700 manufactured by KEYENCE CORPORATION).
A: The barrier layer of the exterior material and the metal wire are not in contact with each other.
C: The barrier layer of the exterior material and the metal wire are in contact with each other.

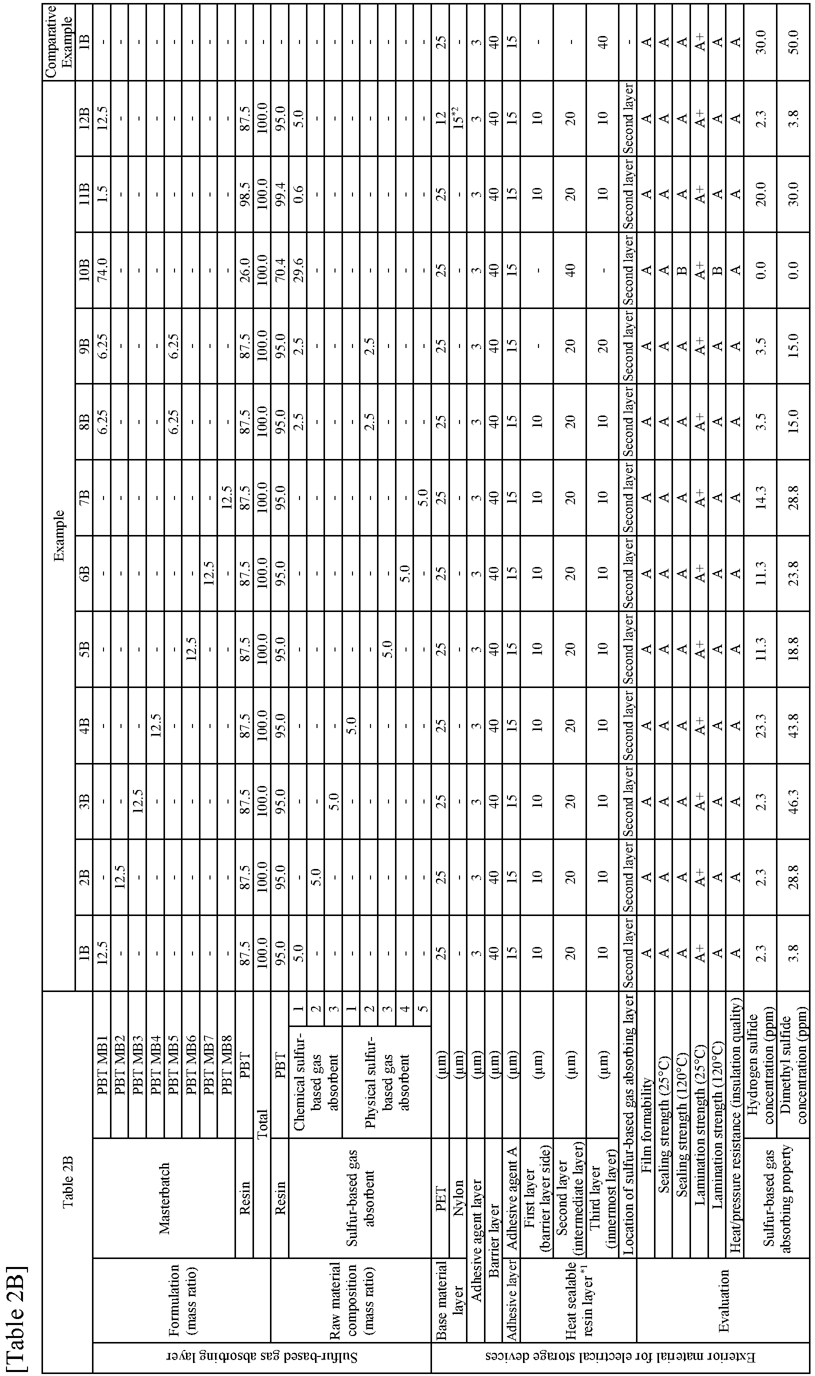

* 1 In the laminated configuration of the heat-sealable resin layer (sealant film) shown in Table 2B, the first layer is disposed on the barrier layer side, and the third layer is an innermost layer.
*2 A laminated film obtained by laminating a polyethylene terephthalate film (thickness: 12 µm) and a nylon film (thickness: 15 µm) with a two-liquid curable urethane resin (thickness after curing: 3 µm) was used as the base material layer of Example 12B.

As described above, the first embodiment of the present disclosure provides the invention of aspects as shown below.

Item 1A. An exterior material for electrical storage devices, including a laminate including at least a base material layer, a barrier layer and a heat-sealable resin layer in this order from the outside, in which
the heat-sealable resin layer is formed of a polybutylene terephthalate film, and
a water absorbing layer containing a water absorbent is provided on the inner side with respect to the barrier layer.

Item 2A. The exterior material for electrical storage devices according to item 1A, in which a content of the absorbent is 0.1 parts by mass or more based on 100 parts by mass of the resin contained in the heat-sealable resin layer.

Item 3A. The exterior material for electrical storage devices according to item 1A or 2A, in which the water absorbent is an inorganic water absorbent.

Item 4A. The exterior material for electrical storage devices according to any one of items 1A to 3A, in which the water absorbent is at least one selected from the group consisting of calcium oxide, anhydrous magnesium sulfate, magnesium oxide, calcium chloride, zeolite, aluminum oxide, silica gel, alumina gel and dried alum.

Item 5A. The exterior material for electrical storage devices according to any one of items 1A to 4A, in which the water absorbing layer contains 0.5 parts by mass or more of the absorbent based on 100 parts of the resin.

Item 6A. The exterior material for electrical storage devices according to any one of items 1A to 5A, in which the heat-sealable resin layer has two or more layers, and the heat-sealable resin layer includes the water absorbing layer.

Item 7A. The exterior material for electrical storage devices according to item 6A, in which among the two or more layers of the heat-sealable resin layer, at least one layer is the water absorbing layer, and at least one layer contains a sulfur-based gas absorbent.

Item 8A. A sealant film that is used for a heat-sealable resin layer of an exterior material for electrical storage devices,
the sealant film being formed of a polybutylene terephthalate film, and
the sealant film including a water absorbing layer containing a water absorbent.

Item 9A. A method for manufacturing an exterior material for electrical storage devices, the method including producing a laminate in which at least a base material layer, a barrier layer and a heat-sealable resin layer are laminated in this order from the outside, in which
the heat-sealable resin layer is formed of a polybutylene terephthalate film, and
a water absorbing layer containing a water absorbent is provided on the inner side with respect to the barrier layer.

Item 10A. An electrical storage device in which an electrical storage device element including at least a positive electrode, a negative electrode and an electrolyte is housed in a packaging formed of the exterior material for electrical storage devices according to any one of items 1A to 7 A.

The second embodiment of the present disclosure provides the invention of aspects as shown below.

Item 1B.An exterior material for electrical storage devices, including a laminate including at least a base material layer, a barrier layer and a heat-sealable resin layer in this order from the outside, in which
the heat-sealable resin layer is formed of a polybutylene terephthalate film, and
a sulfur-based gas absorbing layer containing a sulfur-based gas absorbent is provided on an inner side with respect to the barrier layer.

Item 2B.The exterior material for electrical storage devices according to item 1B, in which a content of the sulfur-based gas absorbent is 0.1 parts by mass or more based on 100 parts by mass of the resin contained in the heat-sealable resin layer.

Item 3B.The exterior material for electrical storage devices according to item 1B or 2B, in which the sulfur-based gas absorbent has a maximum particle size of 20 µm or less and a number average particle size of 0.1 µm or more and 15 µm or less.

Item 4B.The exterior material for electrical storage devices according to any one of items 1B to 3B, in which the sulfur-based gas absorbent contains at least one selected from the group consisting of a chemical sulfur-based gas absorbent and a physical sulfur-based gas absorbent.

Item 5B.The exterior material for electrical storage devices according to item 4B, in which the physical sulfur-based gas absorbent contains at least one selected from the group consisting of hydrophobic zeolite, bentonite and sepiolite in which a molar ratio of SiO₂ to Al₂O₃ is 1/1 to 2000/1.

Item 6B.The exterior material for electrical storage devices according to item 4B or 5B, in which the chemical sulfur-based gas absorbent is a metal oxide, or an inorganic substance carrying or containing a metal or metal ions.

Item 7B.The exterior material for electrical storage devices according to item 6B, in which the metal oxide contains at least one selected from the group consisting of CuO, ZnO and AgO.

Item 8B.The exterior material for electrical storage devices according to item 6B or 7B, in which the metal species in the inorganic substance carrying or containing a metal or metal ions is at least one selected from the group consisting of Ca, Mg, Na, Cu, Zn, Ag, Pt, Au, Fe, Al and Ni.

Item 9B.The exterior material for electrical storage devices according to any one of items 1B to 8B, in which the heat-sealable resin layer has two or more layers, and the heat-sealable resin layer includes the sulfur-based gas absorbing layer.

Item 10B. The exterior material for electrical storage devices according to item 9B, in which among the two or more layers of the heat-sealable resin layer, at least one layer is the sulfur-based gas absorbing layer, and at least one layer contains a water absorbent.

Item 11B. The exterior material for electrical storage devices according to any one of items 1B to 10B, in which the sulfur-based gas absorbing layer contains 5 parts by mass or more of the absorbent based on 100 parts of the resin.

Item 12B. A sealant film that is used for a heat-sealable resin layer of an exterior material for electrical storage devices,
the sealant film being formed of a polybutylene terephthalate film,
the sealant film including a sulfur-based gas absorbing layer containing a sulfur-based gas absorbent.

Item 13B. A method for manufacturing an exterior material for electrical storage devices, the method including producing a laminate in which at least a base material layer, a barrier layer and a heat-sealable resin layer are laminated in this order from the outside, in which
the heat-sealable resin layer is formed of a polybutylene terephthalate film, and
a sulfur-based gas absorbing layer containing a sulfur-based gas absorbent is provided on the inner side with respect to the barrier layer.

Item 14B. An electrical storage device in which an electrical storage device element including at least a positive electrode, a negative electrode, and an electrolyte is stored in a packaging formed of the exterior material for electrical storage devices according to any one of items 1B to 11B.

### DESCRIPTION OF REFERENCE SIGNS

1: Base material layer
2: Adhesive agent layer
3: Barrier layer
4: Heat-sealable resin layer
5: Adhesive layer
6: Surface coating layer
10: Exterior material for electrical storage devices
20: Electrical storage device
21: Metal terminal
22: Adhesive film for metal terminal
23: Electrical storage device element
41: First layer
42: Second layer
43: Third layer

## Claims

1. An exterior material for electrical storage devices, comprising a laminate including at least a base material layer, a barrier layer and a heat-sealable resin layer in this order from an outside, wherein
the heat-sealable resin layer is formed of a polybutylene terephthalate film, and
a water absorbing layer containing a water absorbent is provided on an inner side with respect to the barrier layer.

2. The exterior material for electrical storage devices according to claim 1, wherein a content of the absorbent is 0.1 parts by mass or more based on 100 parts by mass of the resin contained in the heat-sealable resin layer.

3. The exterior material for electrical storage devices according to claim 1 or 2, wherein the water absorbent is an inorganic water absorbent.

4. The exterior material for electrical storage devices according to claim 1 or 2, wherein the water absorbent is at least one selected from the group consisting of calcium oxide, anhydrous magnesium sulfate, magnesium oxide, calcium chloride, zeolite, aluminum oxide, silica gel, alumina gel and dried alum.

5. The exterior material for electrical storage devices according to claim 1 or 2, wherein the water absorbing layer contains 0.5 mass or more of the absorbent based on 100 parts by mass of the resin.

6. The exterior material for electrical storage devices according to claim 1 or 2, wherein the heat-sealable resin layer has two or more layers, and the heat-sealable resin layer includes the water absorbing layer.

7. The exterior material for electrical storage devices according to claim 6, wherein among the two or more layers of the heat-sealable resin layer, at least one layer is the water absorbing layer, and at least one layer contains a sulfur-based gas absorbent.

8. A sealant film that is used for a heat-sealable resin layer of an exterior material for electrical storage devices,
the sealant film being formed of a polybutylene terephthalate film, and
the sealant film including a water absorbing layer containing a water absorbent.

9. A method for manufacturing an exterior material for electrical storage devices, the method comprising producing a laminate in which at least a base material layer, a barrier layer and a heat-sealable resin layer are laminated in this order from an outside, wherein
the heat-sealable resin layer is formed of a polybutylene terephthalate film, and
a water absorbing layer containing a water absorbent is provided on an inner side with respect to the barrier layer.

10. An exterior material for electrical storage devices, comprising a laminate including at least a base material layer, a barrier layer and a heat-sealable resin layer in this order from an outside, wherein
the heat-sealable resin layer is formed of a polybutylene terephthalate film, and
a sulfur-based gas absorbing layer containing a sulfur-based gas absorbent is provided on the inner side with respect to the barrier layer.

11. The exterior material for electrical storage devices according to claim 10, wherein a content of the sulfur-based gas absorbent is 0.1 parts by mass or more based on 100 parts by mass of the resin contained in the heat-sealable resin layer.

12. The exterior material for electrical storage devices according to claim 10 or 11, wherein the sulfur-based gas absorbent has a maximum particle size of 20 µm or less and a number average particle size of 0.1 µm or more and 15 µm or less.

13. The exterior material for electrical storage devices according to claim 10 or 11, wherein the sulfur-based gas absorbent contains at least one selected from the group consisting of a chemical sulfur-based gas absorbent and a physical sulfur-based gas absorbent.

14. The exterior material for electrical storage devices according to claim 12, wherein the physical sulfur-based gas absorbent contains at least one selected from the group consisting of hydrophobic zeolite, bentonite and sepiolite in which a molar ratio of SiO₂ to Al₂O₃ is 1/1 to 2000/1.

15. The exterior material for electrical storage devices according to claim 12, wherein the chemical sulfur-based gas absorbent is a metal oxide, or an inorganic substance carrying or containing a metal or metal ions.

16. The exterior material for electrical storage devices according to claim 14, wherein the metal oxide contains at least one selected from the group consisting of CuO, ZnO and AgO.

17. The exterior material for electrical storage devices according to claim 14, wherein the metal species in the inorganic substance carrying or containing a metal or metal ions is at least one selected from the group consisting of Ca, Mg, Na, Cu, Zn, Ag, Pt, Au, Fe, Al and Ni.

18. The exterior material for electrical storage devices according to claim 10 or 11, wherein the heat-sealable resin layer has two or more layers, and the heat-sealable resin layer includes the sulfur-based gas absorbing layer.

19. The exterior material for electrical storage devices according to claim 18, wherein among the two or more layers of the heat-sealable resin layer, at least one layer is the sulfur-based gas absorbing layer, and at least one layer contains a water absorbent.

20. The exterior material for electrical storage devices according to claim 10 or 11, wherein the sulfur-based gas absorbing layer contains 5 mass or more of the absorbent based on 100 parts by mass of the resin.

21. A sealant film that is used for a heat-sealable resin layer of an exterior material for electrical storage devices,
the sealant film being formed of a polybutylene terephthalate film,
the sealant film including a sulfur-based gas absorbing layer containing a sulfur-based gas absorbent.

22. A method for manufacturing an exterior material for electrical storage devices, the method comprising producing a laminate in which at least a base material layer, a barrier layer and a heat-sealable resin layer are laminated in this order from an outside, wherein
the heat-sealable resin layer is formed of a polybutylene terephthalate film, and
a sulfur-based gas absorbing layer containing a sulfur-based gas absorbent is provided on an inner side with respect to the barrier layer.

23. An electrical storage device in which an electrical storage device element including at least a positive electrode, a negative electrode and an electrolyte is housed in a packaging formed of the exterior material for electrical storage devices according to claims 1 to 7, 10 or 11.
